# EUROPEAN PATENT APPLICATION

(11) **EP 4 440 161 A1**
(43) Date of publication of application: **02.10.2024**
(21) Application number: 22898586.7
(22) Date of filing: 22.11.2022
(51) Int. Cl.: H04W 4/02, H04W 12/104, H04W 64/00, H04W 92/18

(54) **COMMUNICATION SYSTEM**

(30) Priority: 24.11.2021 JP 2021190184
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); TAIRA, Akinori, Tokyo 100-8310 (JP); YAMAUCHI, Takahisa, Tokyo 100-8310 (JP)
(74) Representative: Mewburn Ellis LLP
(86) International application number: PCT/JP2022/043222
(87) International publication number: WO 2023/095803

(57) **Abstract**

A communication system includes: a plurality of positioning signal transmission devices that transmit positioning signals; a positioning signal reception device that receives the positioning signals; and a location calculation device that calculates a location of a terminal to be positioned on the basis of reception results of the positioning signals by the positioning signal reception device, and the plurality of positioning signal transmission devices output integrity assistance data to be used to calculate integrity of a location of the terminal to be positioned, and the location calculation device calculates integrity of a location calculation result of the terminal to be positioned by using the integrity assistance data output from the plurality of positioning signal transmission devices.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

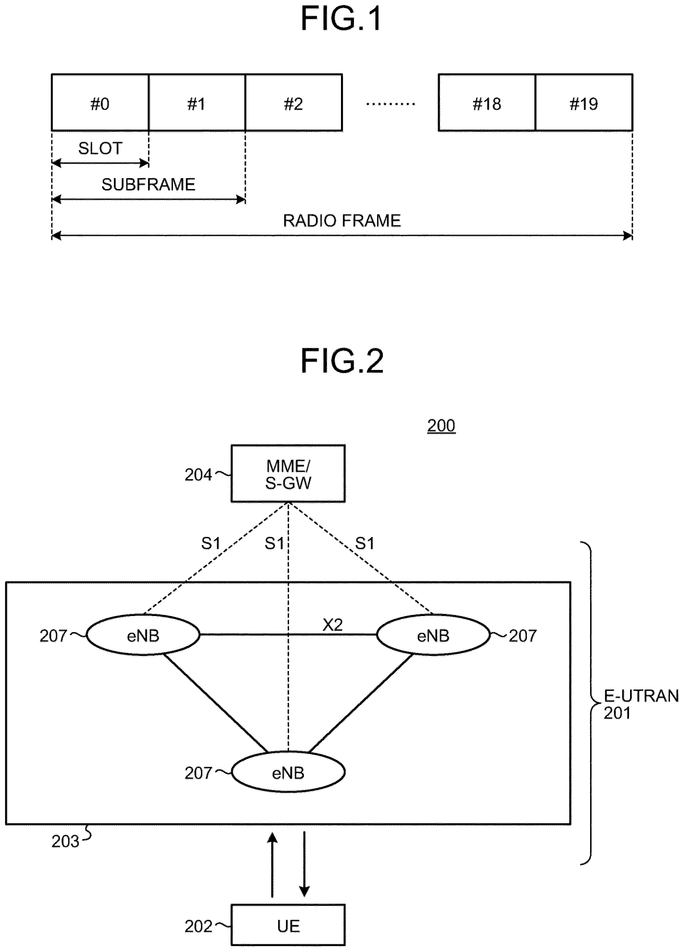

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DMRS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes.
In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)) .

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). In the SL communication, communication is performed between terminals. Examples of the service using the SL communication include a vehicle-to-everything (V2X) service and a proximity service. In the SL communication, not only direct communication between terminals but also communication between a UE and an NW via a relay has been proposed (see Non Patent Literatures 20, 23, and 26).

Furthermore, in 3GPP, integrated access and backhaul (IAB) has been studied in which both an access link which is a link between a UE and a base station and a backhaul link which is a link between base stations are performed by radio (see Non Patent Literatures 16 and 27).

In addition, several new technologies have been studied in 3GPP. For example, application of a positioning technology has been studied. It has been studied to perform positioning of a terminal by using radio waves between a base station and the terminal, and between the terminal and another terminal (see Non Patent Literature 28). A technology for ensuring the integrity of positioning has been studied (see Non Patent Literatures 28 to 31).

### Citation List

### Non Patent Literature

Non Patent Literature 1: 3GPP TS 36.300 V16.6.0
Non Patent Literature 2: 3GPP S1-083461
Non Patent Literature 3: 3GPP TR 36.814 V9.2.0
Non Patent Literature 4: 3GPP TR 36.912 V16.0.0
Non Patent Literature 5: "Scenarios, requirements and KPIs for 5G mobile and wireless system", ICT-317669-METIS/D1.1
Non Patent Literature 6: 3GPP TR 23.799 V14.0.0
Non Patent Literature 7: 3GPP TR 38.801 V14.0.0
Non Patent Literature 8: 3GPP TR 38.802 V14.2.0
Non Patent Literature 9: 3GPP TR 38.804 V14.0.0
Non Patent Literature 10: 3GPP TR 38.912 V16.0.0
Non Patent Literature 11: 3GPP RP-172115
Non Patent Literature 12: 3GPP TS 37.340 V16.7.0
Non Patent Literature 13: 3GPP TS 38.211 V16.7.0
Non Patent Literature 14: 3GPP TS 38.213 V16.7.0
Non Patent Literature 15: 3GPP TS 38.214 V16.7.0
Non Patent Literature 16: 3GPP TS 38.300 V16.7.0
Non Patent Literature 17: 3GPP TS 38.321 V16.6.0
Non Patent Literature 18: 3GPP TS 38.212 V16.7.0
Non Patent Literature 19: 3GPP TS 38.331 V16.6.0
Non Patent Literature 20: 3GPP TR 23.703 V12.0.0
Non Patent Literature 21: 3GPP TS 23.501 V17.2.0
Non Patent Literature 22: 3GPP TS 23.287 V17.1.0
Non Patent Literature 23: 3GPP TS 23.303 V16.0.0
Non Patent Literature 24: 3GPP TS 38.305 V16.6.0
Non Patent Literature 25: 3GPP TS 23.273 V17.2.0
Non Patent Literature 26: 3GPP TR 38.836 V17.0.0
Non Patent Literature 27: 3GPP TS 38.401 V16.7.0
Non Patent Literature 28: 3GPP RP-211660
Non Patent Literature 29: 3GPP RP-210903
Non Patent Literature 30: 3GPP TR 38.857 V17.0.0
Non Patent Literature 31: 3GPP R2-2107989
Non Patent Literature 32: 3GPP TS 37.355 V16.6.0
Non Patent Literature 33: 3GPP RP-211662
Non Patent Literature 34: 3GPP TS 38.455 V16.5.0
Non Patent Literature 35: 3GPP RP-212045
Non Patent Literature 36: 3GPP R2-2109029

### Summary of Invention

### Problem to be solved by the Invention

An integrity derivation procedure currently disclosed in 5G UE positioning is applied to positioning using a global navigation satellite system (GNSS) (see Non Patent Literature 36), and thus cannot be applied to radio access technology (RAT)-dependent positioning (positioning using radio waves of a RAT). As a result, there arises a problem that integrity of RAT-dependent positioning cannot be derived and ensured.

In view of the above problem, an object of the present disclosure is to improve the reliability of positioning, for example, the integrity of positioning.

### Means to Solve the Problem

A communication system according to the present disclosure includes: a plurality of positioning signal transmission devices that transmit positioning signals; a positioning signal reception device that receives the positioning signals; and a location calculation device that calculates a location of a terminal to be positioned on the basis of reception results of the positioning signals by the positioning signal reception device. The plurality of positioning signal transmission devices output integrity assistance data to be used to calculate integrity of a location of the terminal to be positioned, and the location calculation device calculates integrity of a location calculation result of the terminal to be positioned by using the integrity assistance data output from the plurality of positioning signal transmission devices.

### Effects of the Invention

The communication system according to the present disclosure can improve the reliability of positioning.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a sequence diagram illustrating an example of a positioning procedure including a notification of information about the integrity of positioning in a first embodiment.
FIG. 15 is a sequence diagram illustrating another example of the positioning procedure including the notification of the information about the integrity of positioning in the first embodiment.
FIG. 16 is a sequence diagram illustrating another example of the positioning procedure including the notification of the information about the integrity of positioning in the first embodiment.
FIG. 17 is a sequence diagram illustrating an example of a positioning procedure including a notification of information about the integrity of positioning in a first modification of the first embodiment.
FIG. 18 is a sequence diagram illustrating another example of the positioning procedure including the notification of the information about the integrity of positioning in the first modification of the first embodiment.
FIG. 19 is a sequence diagram illustrating another example of the positioning procedure including the notification of the information about the integrity of positioning in the first modification of the first embodiment.
FIG. 20 is a diagram of a first half of a sequence illustrating an example of a positioning procedure including a notification of information about the integrity of positioning in a second embodiment.
FIG. 21 is a diagram of a second half of the sequence illustrating the example of the positioning procedure including the notification of the information about the integrity of positioning in the second embodiment.
FIG. 22 is a sequence diagram illustrating another example of the positioning procedure including the notification of the information about the integrity of positioning in the second embodiment.
FIG. 23 is a sequence diagram illustrating another example of the positioning procedure including the notification of the information about the integrity of positioning in the second embodiment.
FIG. 24 is a diagram of a first half of a sequence illustrating an example of a positioning procedure including a notification of information about the integrity of positioning in a first modification of the second embodiment.
FIG. 25 is a diagram of a second half of the sequence illustrating the example of the positioning procedure including the notification of the information about the integrity of positioning in the first modification of the second embodiment.
FIG. 26 is a sequence diagram illustrating another example of the positioning procedure including the notification of the information about the integrity of positioning in the first modification of the second embodiment.
FIG. 27 is a sequence diagram illustrating another example of the positioning procedure including the notification of the information about the integrity of positioning in the first modification of the second embodiment.
FIG. 28 is a sequence diagram illustrating an example of a positioning procedure including a notification of information about the integrity of positioning in a second modification of the second embodiment.
FIG. 29 is a sequence diagram illustrating another example of the positioning procedure including the notification of the information about the integrity of positioning in the second modification of the second embodiment.
FIG. 30 is a diagram of a first half of a sequence illustrating an example of a positioning procedure in which positioning signal transmission from a UE to be positioned to a plurality of positioning UEs is performed by using one positioning signal in a third embodiment.
FIG. 31 is a diagram of a second half of the sequence illustrating the example of the positioning procedure in which positioning signal transmission from the UE to be positioned to the plurality of positioning UEs is performed by using one positioning signal in the third embodiment.
FIG. 32 is a diagram of a first half of a sequence illustrating an example of a positioning procedure in which positioning signal transmission from positioning UEs to a plurality of UEs to be positioned is performed by using one positioning signal in the third embodiment.
FIG. 33 is a diagram of a second half of the sequence illustrating the example of the positioning procedure in which positioning signal transmission from the positioning UEs to the plurality of UEs to be positioned is performed by using one positioning signal in the third embodiment.
FIG. 34 is a diagram of a first half of a sequence illustrating an example of a positioning procedure in which positioning signal transmission from a UE to be positioned to positioning UEs and a base station is performed by using one positioning signal in the third embodiment.
FIG. 35 is a diagram of a second half of the sequence illustrating the example of the positioning procedure in which positioning signal transmission from the UE to be positioned to the positioning UEs and the base station is performed by using one positioning signal in the third embodiment.

### Description of Embodiments

### First Embodiment.

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a non-moving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTRAN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

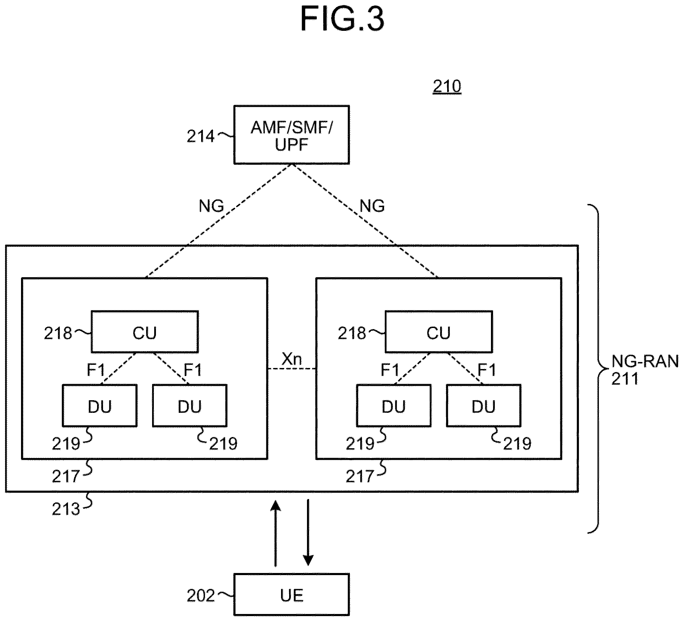

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS 38.305) may be provided in the 5G communication system. The LMF may be connected to a base station via the AMF as disclosed in Non Patent Literature 25 (3GPP TS 23.273).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

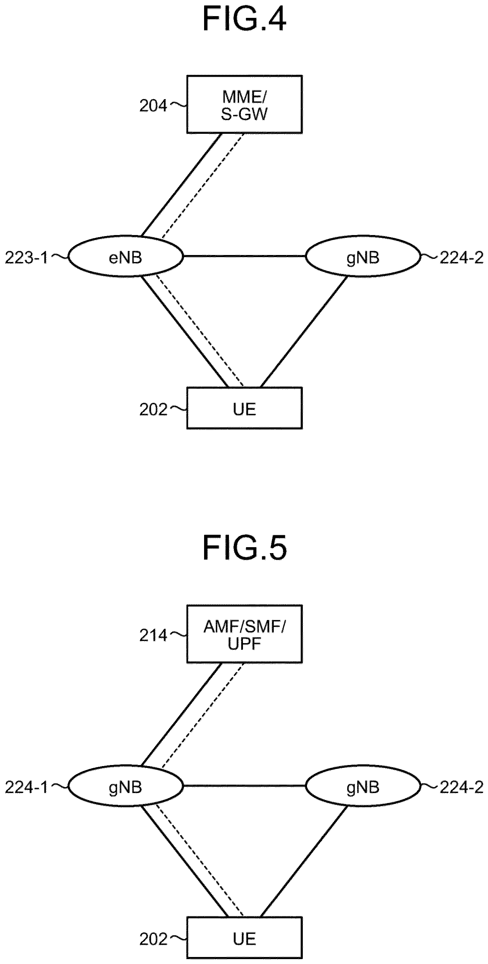

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

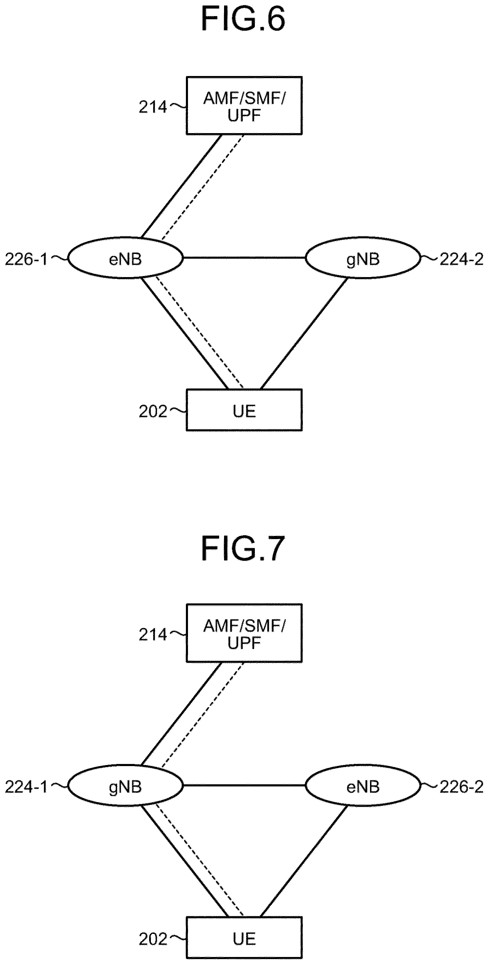

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

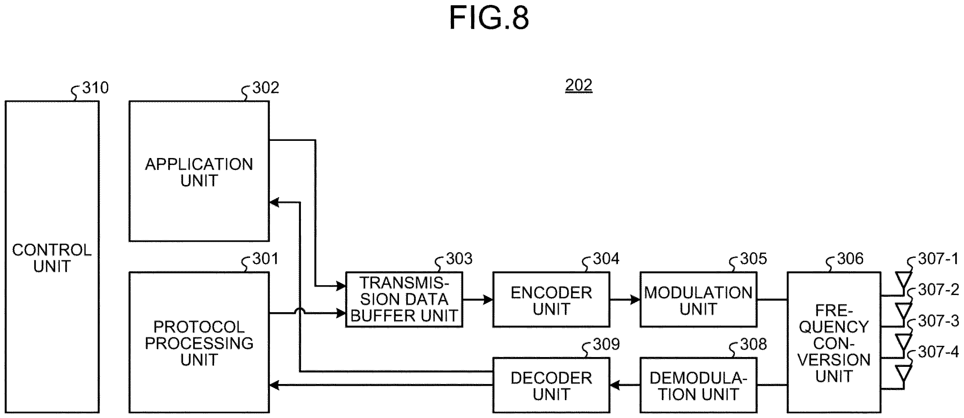

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

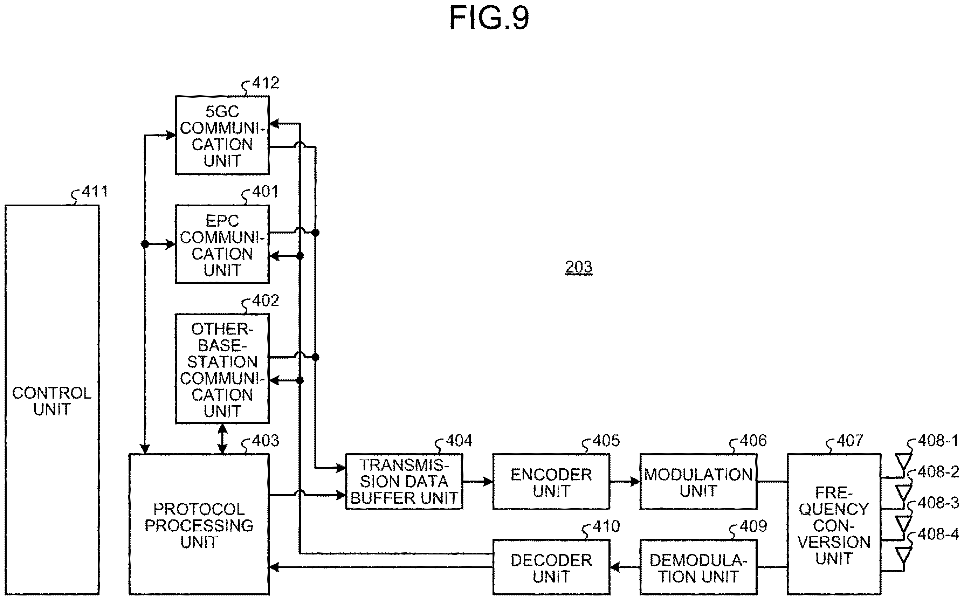

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411.
Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

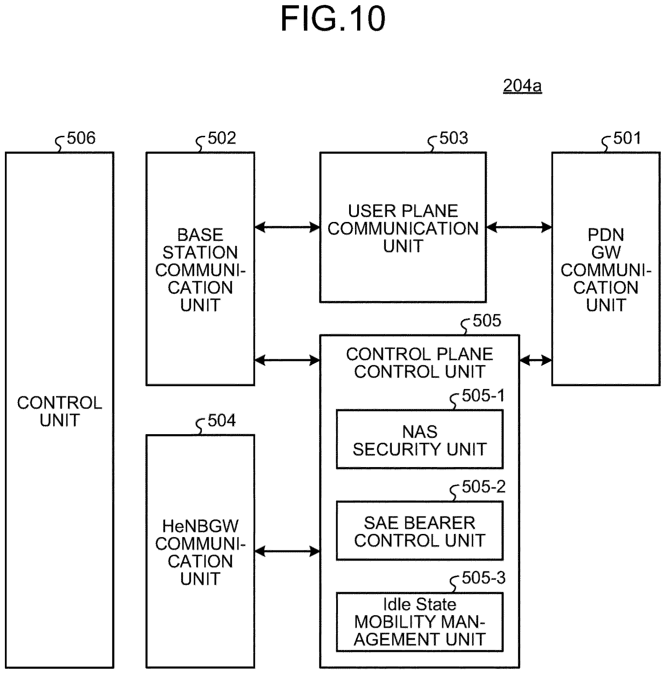

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW). Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

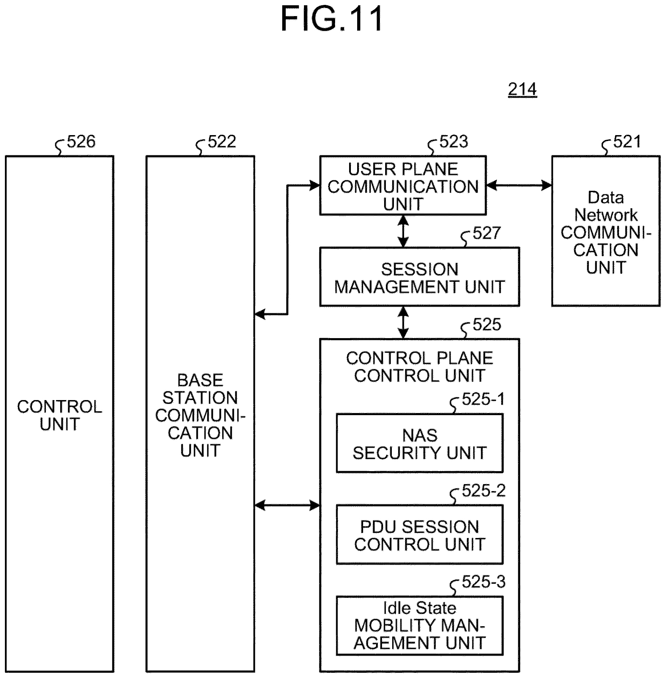

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

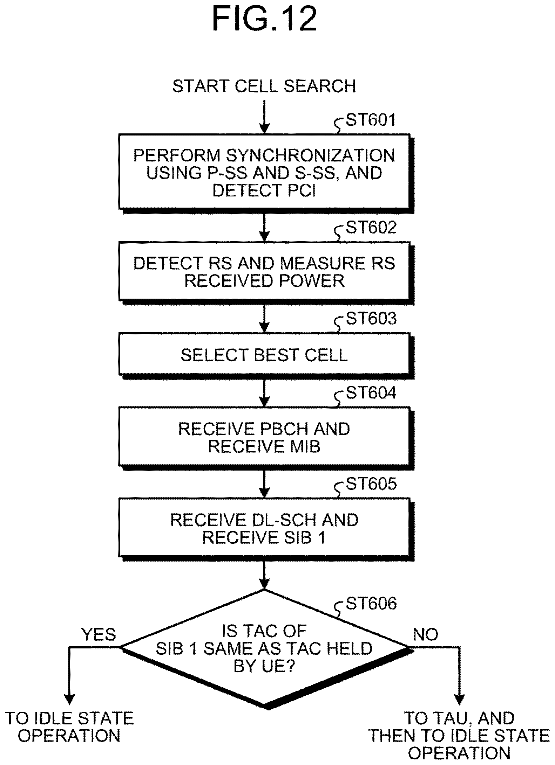

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

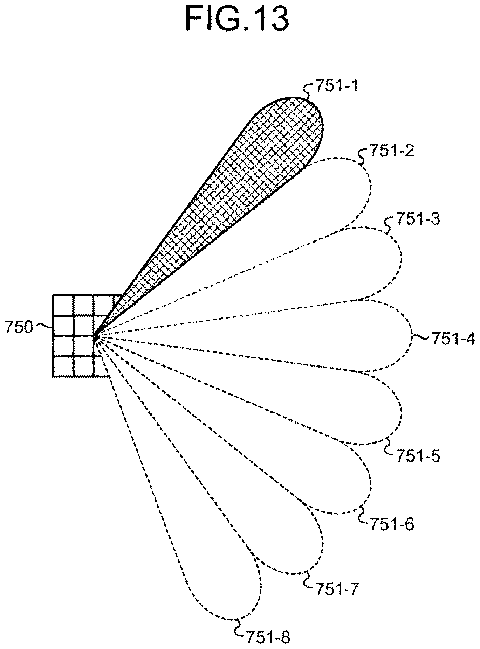

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes to and from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS 23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS 23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS 23.287)). The RRC signaling in the SL communication is also referred to as PC5 RRC signaling. For example, it has been proposed to perform notifications, between UEs that perform PC5 communication, of capability of each UE, and of an AS layer configuration for performing the V2X communication using the PC5 communication.

In a communication system, positioning of a terminal or the like may be performed. In the positioning of a terminal or the like, a global navigation satellite system (GNSS) may be used, radio waves of a RAT may be used, or another communication system such as a wireless LAN may be used.

The positioning of a terminal or the like is performed as triggered by a request from a location information service-utilizing device external to a network (hereinafter, sometimes referred to as an external device). As another example, the positioning of a terminal or the like may be performed as triggered by a request from the terminal itself, or may be performed as triggered by a request from a network device, for example, an AMF. The positioning may be performed as triggered by a request from an operation and management (OAM) device. The request is made to an LMF. The LMF starts the positioning of a terminal or the like.

In the positioning of a terminal or the like, positioning signals are transmitted and received. Transmission/reception results of the positioning signals are used to calculate a location of the terminal. A configuration of the positioning signal and/or a notification of the configuration may be performed, or a notification of positioning signal reception results may be performed.

Regarding a method for calculating the location of the terminal, for example, the method may use information about a cell in which the terminal is located, information about a transmission/reception directions of radio waves between the base station and the terminal, or information about a propagation delay between the base station and the terminal. The number of base stations to be used for the location calculation may be two or more, or may be one. The base stations may include a serving base station or may include a neighbor base station. A plurality of cells or a plurality of transmission reception points (TRPs) may be used for the location calculation.

A location of a terminal or the like may be calculated by the terminal itself. The terminal calculates the location of the terminal by using positioning signal reception results in the terminal. Positioning signal reception results in a device to be a communication partner of the terminal (hereinafter, sometimes referred to as a partner device) may be used. In that case, the partner device notifies the terminal of the positioning signal reception results. Positioning signal reception results in both the terminal and the partner device may be used for the location calculation. The terminal notifies the LMF of a location calculation result (hereinafter, sometimes referred to as a positioning result). The LMF notifies a device serving as a source of the request of the positioning result of the terminal.

The location of a terminal or the like may be calculated by the LMF. The LMF calculates the location of the terminal by using positioning signal reception results in the terminal and/or the partner device. The terminal and/or the partner device transmits the positioning signal reception results to the LMF. The LMF notifies a device serving as a source of the request of the positioning result of the terminal.

A positioning reference signal (PRS) may be used as the positioning signal. The base station transmits the PRS to the terminal. The terminal receives the PRS. The terminal derives, for example, a propagation delay as a reception result of the PRS.

A sounding reference signal (SRS) may be used as the signal. The SRS for positioning may be provided and used. The terminal transmits the SRS to the base station. The base station derives, for example, a propagation delay as a reception result of the SRS.

Both the PRS and the SRS may be used as the positioning signal. The base station transmits the PRS to the terminal. The terminal transmits the SRS to the base station. A round-trip time between the base station and the terminal is derived and used for the location calculation.

Integrity may be derived in the positioning of a terminal or the like. The integrity of positioning is an index representing the reliability of positioning precision (see Non Patent Literature 30). An example of the integrity of positioning may include a protection limit (PL: statistical upper limit of positioning error, updated in real time) (see Non Patent Literature 30). The derivation of the integrity may be performed with the location calculation. The derivation may be performed by a subject that calculates the location of a terminal or the like (hereinafter, sometimes referred to as a location calculation subject). The location calculation subject may be the terminal itself or the LMF.

In positioning, transmission/reception of integrity assistance data may be performed. Examples of the integrity assistance data include GNSS error sources, for example, information about a satellite orbit, an ionospheric model, and a tropospheric model (e.g., mean of errors and standard deviation of errors) (see Non Patent Literature 36). The location calculation subject may derive the integrity of positioning by using the integrity assistance data.

However, the integrity derivation procedure currently disclosed is applied to positioning using GNSS, and thus cannot be applied to RAT-dependent positioning. As a result, there arises a problem that integrity of RAT-dependent positioning cannot be ensured.

The first embodiment discloses a method for solving the above problem.

In order to solve the above problem, in the communication system according to the present embodiment, a notification of integrity assistance data in the RAT-dependent positioning is performed.

The LMF may notify the UE of the integrity assistance data. The notification may be applied to UE-based positioning (positioning in which the UE performs a location calculation). The notification may be included, for example, in signaling of LPP Provide Assistance Data (see Non Patent Literature 32) or signaling of LPP Request Location Information (see Non Patent Literature 32).

The integrity assistance data may include information about the location of the base station. The information may include information about a CU of the base station, information about a DU of the base station, or information about a TRP. The information may be used in the RAT-dependent positioning, for example. The information may include, for example, information about an error in the location of the base station, the CU, the DU, and/or the TRP (hereinafter, sometimes referred to as a base station or the like), information about precision of the location of the base station or the like, information about a fluctuation in the location of the base station or the like, or information about a moving speed of the base station or the like. For example, by including the information about a fluctuation in the location of the base station or the like and/or a speed thereof, it is possible to ensure the integrity of positioning of the UE also in a case where the positioning is performed by using a movable base station.

The integrity assistance data may include information about time and/or a clock of the base station or the like. The information may be used in the RAT-dependent positioning, for example. The information may include, for example, information about an error in the time of the base station or the like, information about precision of the time of the base station or the like, information about accuracy of the time of the base station or the like, information about jitter of the clock of the base station or the like, or information about standard deviation of a clock period of the base station or the like.

The integrity assistance data may include information about a cell of the base station, for example, an identifier of the cell, information about a carrier of the base station, information about a component carrier (CC) of the base station, information about a beam, for example, a beam identifier, information about an antenna port, for example, a port number, information about a transmission configuration indicator (TCI) state, or information about quasi co-location (QCL). The above information may be, for example, the information related to a positioning signal, the information related to the entirety of candidates for resources of the positioning signal, or the information about a whole or a part of resources of the base station. The UE may use the information to derive the integrity. Consequently, it is possible to improve flexibility in the integrity derivation, for example, it is possible to derive the integrity of a positioning result for each carrier of the base station.

The base station may notify the UE of the integrity assistance data. For example, the base station may notify the UE of integrity assistance data on the base station. For example, RRC signaling may be used for the notification. The signaling may be, for example, RRCReconfiguration, or another signaling. The notification may be performed, for example, as triggered by an integrity assistance data request from the LMF to the base station, or may be performed as triggered by a change in the assistance data in the base station. Consequently, for example, the UE can promptly acquire the assistance data.

The LMF may request the integrity assistance data from the base station. For the request, NRPPa signaling, for example, signaling of NRPPa TRP INFORMATION REQUEST may be used, or another signaling may be used. The request may include information about the type of the integrity assistance data requested by the LMF.

The base station may notify the LMF of the integrity assistance data. For the request, NRPPa signaling, for example, signaling of NRPPa TRP INFORMATION RESPONSE may be used, or another signaling may be used.
The base station may perform the notification, for example, as triggered by the request from the LMF.

As another example, the base station may perform the notification as triggered by a change in the data. The notification may include the information about the type of the integrity assistance data requested by the LMF. Consequently, for example, each device in the communication system can execute positioning by using the data which is latest.

A positioning requesting device may notify the LMF of information about an integrity key performance indicator (KPI). The positioning requesting device may be, for example, a location information service-utilizing device external to the network, an AMF, a UE to be positioned itself, another UE, or an operation and management (OAM) device.

The location information service-utilizing device external to the network (hereinafter, sometimes referred to as an external device) may notify the LMF of the information via a gateway mobile location centre (GMLC) (see Non Patent Literature 25). The notification may be performed, for example, in positioning in which the positioning requesting device makes a location request, that is, in positioning in accordance with a mobile-terminated location request (MT-LR). The notification may be performed by using, for example, an LCS service request (see Non Patent Literature 25). The GMLC may notify the AMF of the information. For the notification from the GMLC to the AMF, for example, signaling of Namf_Location_Provide Positioning Info Request (see Non Patent Literature 25) may be used. The AMF may notify the LMF of the information. For the notification from the AMF to the LMF, for example, signaling of Nlmf_Location_Determine Location Request (see Non Patent Literature 25) may be used. The LMF may notify the UE of the information. For the notification from the LMF to the UE, for example, signaling of LPP Request Location Information (see Non Patent Literature 32) may be used, or signaling of LPP Provide assistance data (see Non Patent Literature 32) may be used.

The integrity KPI may include an alert limit (AL) (see Non Patent Literature 30), a target integrity risk (TIR) (see Non Patent Literature 30), or time to alert (TTA) (see Non Patent Literature 30).

New information may be provided as the integrity KPI. For example, information about not line of sight (NLOS) and/or line of sight (LOS) on paths between the UE to be positioned and positioning signal sources/destinations may be included. The information may be, for example, a ratio of LOS paths to the total number of paths between the UE to be positioned and the positioning signal sources/destinations, that is, the number of positioning signal sources/destinations, to be satisfied by the UE to be positioned, the number of LOS paths to be satisfied by the UE, or the number of NLOS paths to be prevented by the UE from being greater than, or equal to or greater than that. Consequently, for example, LOS paths can be ensured in positioning of the UE, and as a result, the reliability of the positioning can be ensured.

As another example of the new information, information about the reliability (e.g., probability) of an inference result in positioning using artificial intelligence (AI) (see Non Patent Literature 33) may be included. The information may include, for example, an allowable minimum value of the reliability of the inference result, or may include information about errors between learning data and the inference result in an AI learning device (e.g., mean and standard deviation). Consequently, for example, it is possible to ensure the integrity also in positioning using AI.

The integrity KPI may be given for each positioning method. For example, the integrity KPI may be given for each of positioning using GNSS, RAN positioning, positioning using AI, and/or positioning using sidelink communication. Consequently, for example, it is possible to improve flexibility in ensuring the integrity.

As another example, a plurality of KPIs may be provided in one positioning method. For example, different KPI values may be provided for positioning in each of longitudinal and lateral directions, different KPI values may be provided for positioning in each of horizontal and vertical directions, or different KPI values may be provided for positioning in each direction in three-dimensional coordinates. Consequently, it is possible to flexibly configure the KPI for a positioning requirement in each direction.

As another example, the integrity KPI may be commonly given among a plurality of positioning methods. Consequently, for example, it is possible to avoid complexity in the communication system.

The UE may notify the LMF of information about an integrity derivation result. The notification may be included in the notification of the positioning result, for example. The notification may be performed via the AMF. The information may be performed by using, for example, signaling of LPP Provide Location Information (see Non Patent Literature 32).

The LMF may notify the AMF of the information about the integrity derivation result. The information may be included, for example, in signaling of Nlmf_Location_Determine Location Response (see Non Patent Literature 25). The AMF may notify the external device of the information. The notification from the AMF to the external device may be performed via the GMLC.

The following (1) to (13) will be disclosed as the information about the integrity derivation result.
(1) Information about a positioning error (PE).
(2) Information about a protection limit (PL).
(3) Information about NLOS and LOS on paths between the UE to be positioned and the positioning signal sources/destinations.
(4) Information about a receive-to-transmit delay in positioning signal transmission/reception between the UE to be positioned and the positioning signal sources/destinations.
(5) Information about a reception result of a signal.
(6) Information about the terminal.
(7) Information about a frequency band of a received signal.
(8) Information about a bandwidth part (BWP) of the received signal.
(9) Information about the reliability of a result of positioning using AI.
(10) Information about an adverse event (sometimes referred to as a feared event).
(11) Information about the necessity of repositioning.
(12) Information about the base station or the like.
(13) A combination of (1) to (12) described above.

The information about the above (1) may be, for example, a PE value itself, information indicating a magnitude relationship between the PE and the AL, or a duration of an event in which the PE is greater than the AL.

The information about the above (2) may be, for example, a value of the PL (see Non Patent Literature 30), or information about a magnitude relationship between the PL and the AL.

An example of the above (3) may be a ratio of the number of LOS paths to the total number of paths between the UE and the positioning signal sources/destinations, that is, the number of positioning signal sources/destinations, may be the number of LOS paths, or may be the number of NLOS paths. Information about the LOS/NLOS in each path may be included. Information about the above total number of paths may be included. The information may include information about devices serving as positioning signal sources/destinations, for example, base stations. A combination of the above information and the information about the devices as the positioning signal sources/destinations may be used. The LMF may reselect positioning base stations by using the information. Consequently, for example, it is possible to improve integrity of the RAN positioning.

An example of the above (4) may be a ratio of the number of paths in which the receive-to-transmit delay is greater than, or equal to or greater than a predetermined threshold to the total number of paths between the UE and the positioning signal sources/destinations, that is, the number of positioning signal sources/destinations, may be the number of paths in which the receive-to-transmit delay is greater than, or equal to or greater than the predetermined threshold, or may be the number of paths in which the receive-to-transmit delay is smaller than, or equal to or smaller than the predetermined threshold. Information about the above total number of paths may be included. The information may include information about a receive-to-transmit delay in each path, for example, information about a value of the receive-to-transmit delay, and/or a magnitude relationship between the receive-to-transmit delay and the predetermined threshold. The information may include information about devices serving as positioning signal sources/destinations, for example, base stations. A combination of the above information and the information about the devices as the positioning signal sources/destinations may be used. The LMF may determine to execute the positioning again by using the information. The LMF may notify the base station of the information. The LMF may make a request to the base station for a change in scheduling of positioning signals. The request may include the information, or a notification of the information may include the request. The base station may perform the scheduling of positioning signals by using the information. Consequently, for example, a receive-to-transmit delay in positioning signal transmission/reception between the UE to be positioned and the positioning base stations can be shortened, and as a result, the integrity of the RAN positioning can be improved.

The information about the above (5) may be, for example, received power, reception quality, and/or a signal-to-interference-plus-noise ratio of the positioning signal. Another example thereof may be information indicating a magnitude relationship between each of the received power, the reception quality, and/or the signal-to-interference-plus-noise ratio of the positioning signal, and a predetermined threshold thereof. The LMF may change the base station as the positioning signal source/destination by using the information received from the UE. Consequently, for example, stable positioning signal transmission/reception can be performed between the UE and the positioning base stations, and as a result, the integrity of positioning can be ensured.

As another example of the information about the above (5), information about a time delay of a received signal may be included. The information may include, for example, a value of the time delay, or information about distribution of the time delay (e.g., delay spread).

The information about the above (6) may include, for example, information about a moving speed of the terminal. The information may be, for example, a value of the moving speed of the terminal. The value of the moving speed may be, for example, an absolute speed of the terminal, for example, a value of a ground speed, or may be a value of a relative speed between the terminal and each positioning base station. As another example, information about a Doppler shift of the received signal may be included, or information about a Doppler spread (e.g., standard deviation from a center frequency) may be included. The above may be a combination with information about the positioning base stations.

The information about the above (6) may include information about a beam of the terminal, information about an antenna port of the terminal, for example, a port number, or information about a panel of the terminal.

The information about the above (7) may be, for example, information about a frequency band of a positioning signal that has been received or was able to be received by the UE. The LMF may notify the base station of the information received from the UE. The base station may perform the scheduling for positioning signals by using the information. Consequently, for example, a broader band positioning signal can be received by the UE, and as a result, the positioning precision and/or the integrity of positioning can be improved.

The information about the above (8) may be, for example, information about a BWP of a positioning signal that has been received or was able to be received by the UE. The LMF may notify the base station of the information received from the UE. The base station may determine a BWP for transmitting and receiving positioning signals by using the information. Consequently, for example, a broader band positioning signal can be received by the UE, and as a result, the positioning precision and/or the integrity of positioning can be improved.

The information about the above (9) may be, for example, information about whether positioning using AI is performed by the UE, or may include information about the reliability (e.g., probability) of an inference result in the positioning using AI. With the use of the information, the LMF may trigger a relearning operation in the positioning using AI. Consequently, for example, it is possible to ensure the integrity also in positioning using AI.

The information about the above (10) may be, for example, information about a subject that has adversely affected or is likely to adversely affect a positioning result. The information may be, for example, an adverse event by the UE (UE feared event), an adverse event by the base station (RAN feared event), or an adverse event by a propagation environment. An identifier representing the subject (e.g., an identifier of the base station) may be included. With the use of the information, the LMF may determine the necessity of repositioning, or may determine a base station to be used for positioning. Consequently, for example, it is possible to ensure the integrity of positioning.

A condition for determining a subject of the adverse event may be determined in a standard. For example, in a case where the moving speed of the UE is greater than, or equal to or greater than a predetermined threshold, the UE may determine that an adverse event by the UE itself has occurred. The LMF may determine the condition and notify the UE thereof. With the use of the condition, the UE may determine whether the adverse event has occurred and/or determine a subject thereof. Consequently, for example, it is possible to prevent inconsistency in an adverse event determination result between the LMF and the UE, and as a result, it is possible to prevent deterioration of a positioning result due to control by the LMF over positioning.

For the information about the above (11), for example, the UE may determine the necessity of repositioning. The UE may determine the necessity of the repositioning by using the integrity assistance data and/or the information about the integrity derivation result. The UE may notify the LMF of the determination result. The LMF may determine the repositioning by using the determination result. Consequently, for example, it is possible to ensure the integrity of the positioning.

As another example of the information about the above (11), the LMF may determine the necessity of repositioning. The LMF may determine the necessity of the repositioning by using the integrity assistance data and/or the information about the integrity derivation result. The LMF may notify a source of the positioning request of the determination result. A positioning requesting LMF may determine the repositioning by using the determination result. Consequently, for example, it is possible to ensure the integrity of the positioning.

The information about the above (12) may include information about a cell of the base station, for example, an identifier of the cell, information about a carrier of the base station, information about a CC of the base station, information about a beam, for example, a beam identifier, information about an antenna port, for example, a port number, information about a TCI state, or information about QCL. The above information may be, for example, the information related to a positioning signal, the information related to the entirety of candidates for resources of the positioning signal, or the information about a whole or a part of resources of the base station. The positioning requesting LMF may use the information for the determination of the repositioning. Consequently, for example, it is possible to ensure the integrity of the positioning.

The UE may perform a notification of the information about the integrity derivation result together with a notification of a result of each positioning. Consequently, for example, the LMF can promptly acquire the information.

As another example, the notification of the information may be performed periodically, or may be performed in a case where a predetermined condition is satisfied. The predetermined condition may include a case where there is a change greater than, or equal to or greater than a predetermined value from a previous integrity derivation result. As another example, the notification of the information may be performed as triggered by a KPI change from the LMF. The period and/or the predetermined condition may be defined in a standard, or the LMF, the AMF, and/or the base station may determine the period and/or the predetermined condition and notify the UE thereof. Consequently, for example, it is possible to reduce the amount of signaling between the UE and the LMF.

The LMF may determine the necessity of the repositioning by using the information about the integrity derivation result which the UE has notified the LMF of. The LMF may make a request to the base station for the repositioning. The request may include some or all of the information about the integrity derivation result which the UE has notified the LMF of. The base station may perform the scheduling of positioning signals by using the information. Consequently, for example, the reception quality of positioning signals in the UE and/or the base station can be improved, and as a result, the integrity of positioning can be improved.

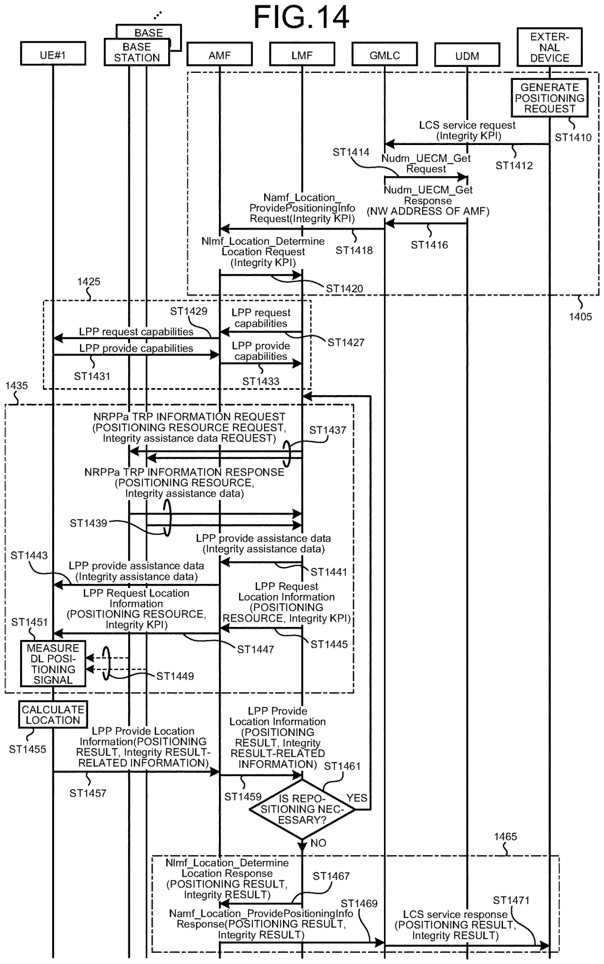

FIG. 14 is a sequence diagram illustrating an example of a positioning procedure including a notification of information about the integrity of positioning. FIG. 14 illustrates an example of UE-based positioning in accordance with the MT-LR. The example illustrated in FIG. 14 illustrates a case where downlink time difference of arrival (DL-TDOA) is used as a method for positioning a UE. The example illustrated in FIG. 14 illustrates a case where the UE to be positioned is UE #1. In addition, in the example illustrated in FIG. 14, each base station operates as a positioning signal transmission device, and UE #1 operates as a positioning signal reception device and a location calculation device.

In procedure 1405 illustrated in FIG. 14, a positioning request to the LMF is made from an external device. In step ST1410, a positioning request for UE #1 is generated in the external device. In step ST1412, the external device transmits the positioning request to the GMLC. The request may include information about the integrity KPI.

In step ST1414 illustrated in FIG. 14, the GMLC inquires of a UDM about an NW address of the AMF. In step ST1416, the UDM notifies the GMLC of the NW address of the AMF.

In step ST1418 illustrated in FIG. 14, the GMLC transfers the positioning request from the external device to the AMF. The request may include the information about the integrity KPI. In step ST1420, the AMF transfers the request to the LMF. The request may include the information about the integrity KPI.

In procedure 1425 illustrated in FIG. 14, a positioning capability acquisition operation for UE #1 by the LMF is performed. In steps ST1427 and ST1429, the LMF makes a request to UE #1 for a positioning capability. In the example illustrated in FIG. 14, the request is made via the AMF. Step ST1427 indicates the request from the LMF to the AMF, and step ST1429 indicates the request from the AMF to UE #1. In steps ST1431 and ST1433, UE #1 notifies the LMF of the positioning capability. In the example illustrated in FIG. 14, the notification is performed via the AMF. Step ST1431 indicates the notification from UE #1 to the AMF, and step ST1433 indicates the notification from the AMF to the LMF.

In procedure 1435 illustrated in FIG. 14, a positioning configuration by the LMF and positioning signal transmission from each base station to UE #1 are performed. FIG. 14 illustrates a case where DL-TDOA is used as the positioning method. In step ST1437, the LMF makes a request to each base station operating as a positioning signal transmission device for information about resources of the positioning signal. For the request, for example, signaling of NRPPa TRP INFORMATION REQUEST (see Non Patent Literature 34) may be used. A request for integrity assistance data may be included in step ST1437. Information about the integrity assistance data to be requested, for example, information about the type thereof may be included in step ST1437. The request in step ST1437 may be made to a positioning base station. The request may be made to a plurality of base stations. In step ST1439, each base station notifies the LMF of the information about the resources of the positioning signal. For the notification, for example, signaling of NRPPa TRP INFORMATION RESPONSE (see Non Patent Literature 34) may be used. The integrity assistance data may be included in step ST1439. The assistance data may be, for example, integrity assistance data on the base station. The notification in step ST1439 may be performed from a positioning base station. The notification may be performed by a plurality of base stations. The LMF acquires the integrity assistance data by using step ST1439.

In steps ST1441 and ST1443 illustrated in FIG. 14, the LMF notifies UE #1 operating as a positioning signal reception device and the location calculation device of positioning assistance data. In the example illustrated in FIG. 14, the notification is performed via the AMF. Step ST1441 indicates the notification from the LMF to the AMF, and step ST1443 indicates the notification from the AMF to UE #1. For example, signaling of LPP provide assistance data (see Non Patent Literature 32) may be used for the notification. The notification may include positioning assistance information, for example, information about the location of each base station and/or information about time of each base station, or may include information about the integrity assistance data.

In steps ST1445 and ST1447 illustrated in FIG. 14, the LMF requests positioning-related information from UE #1. In the example illustrated in FIG. 14, the request is made via the AMF. Step ST1445 indicates the request from the LMF to the AMF, and step ST1447 indicates the request from the AMF to UE #1. For example, signaling of LPP Request Location Information (see Non Patent Literature 32) may be used for the request. The request may include information about the positioning method, information about resources of a positioning signal to be transmitted by each base station to UE #1, or the information about the integrity KPI.

In step ST1449 illustrated in FIG. 14, each base station transmits a positioning signal to UE #1. For example, a positioning reference signal (PRS) may be used for the signal. In step ST1451, UE #1 receives the positioning signal from each base station.

In step ST1455 illustrated in FIG. 14, UE #1 calculates the location of UE #1. UE #1 may perform the calculation by using reception results of the positioning signals in step ST1449. UE #1 may derive the integrity of a calculated positioning result (location information). UE #1 may use the integrity assistance data to derive the integrity.

In steps ST1457 and ST1459 illustrated in FIG. 14, UE #1 notifies the LMF of the positioning result. In the example illustrated in FIG. 14, the notification is performed via the AMF. Step ST1457 indicates the notification from UE #1 to the AMF, and step ST1459 indicates the notification from the AMF to the LMF. The notification may include the positioning result, or information about a derived integrity result.

In step ST1461 illustrated in FIG. 14, the LMF determines the necessity of repositioning. The information about the integrity result may be used for the determination. In the case illustrated in FIG. 14, if the LMF determines that the repositioning is necessary, the LMF resumes the process from step ST1437.

In the example illustrated in FIG. 14, if the LMF determines that the repositioning is not necessary, a positioning result notification process illustrated in procedure 1465 is performed.

In step ST1467 illustrated in FIG. 14, the LMF notifies the AMF of the positioning result. The notification may include the information about the integrity result.

In step ST1469 illustrated in FIG. 14, the AMF notifies the GMLC of the positioning result. The notification may include the information about the integrity result. In step ST1471, the GMLC notifies the external device of the positioning result. The notification may include the information about the integrity result.

Although FIG. 14 illustrates the example in which the LMF determines the necessity of the repositioning, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST1457 and ST1459. Consequently, for example, it is possible to reduce the amount of processing of the LMF.

Although FIG. 14 illustrates the case where DL-TDOA is used, downlink angle of departure (DL-AoD) may be used, or another positioning method may be used. For example, it is possible to ensure integrity also in positioning using DL-AoD.

Although the example is illustrated in which the LMF makes a request for or performs a notification of the integrity assistance data to each base station operating as a positioning signal transmission device in steps ST1437 and ST1439 illustrated in FIG. 14, the request may be made and/or the notification may be performed via one or a plurality of base stations. Each of the base stations may be, for example, a serving base station of the UE. The request and/or notification between the LMF and each of the base stations may include information about another base station operating as a positioning signal transmission device. Inter-base station signaling, for example, Xn signaling may be used for the request and/or the notification between each of the base stations and the another base station operating as a positioning signal transmission device. Consequently, for example, it is possible to reduce the amount of signaling between the LMF and each base station.

Although the example has been described in which the notifications of the positioning result and the integrity result-related information are performed by the same signaling in steps ST1457 and ST1459 illustrated in FIG. 14, the notifications may be performed by different signalings. The notification of only one of the positioning result and the integrity result-related information may be performed. The notification of the positioning result and/or the integrity result-related information may be performed a plurality of times. Consequently, for example, it is possible to improve flexibility in the communication system.

The derivation and/or notification of the information about the integrity of positioning may be performed in positioning in accordance with a network-induced location request (NI-LR). A source of a location request may be the AMF, the OAM, or a UE not to be positioned. The OAM may make the location request via the AMF. The UE not to be positioned may make the location request via the AMF.

The AMF may notify the LMF of the information about the integrity KPI. The notification may be included in the location request, for example. For the notification from the AMF to the LMF, for example, signaling of Nlmf_Location_Determine Location Request (see Non Patent Literature 25) may be used.

The LMF may notify the UE of the integrity assistance data. The notification may be included, for example, in signaling of LPP Provide Assistance Data (see Non Patent Literature 32) or signaling of LPP Request Location Information (see Non Patent Literature 32). Information included in the integrity assistance data in UE-based positioning of the NI-LR may be similar to that in the integrity assistance data in the UE-based positioning of the MT-LR described above.

The LMF may notify the AMF of the information about the integrity derivation result. The notification may be included in a response to the location request, for example. For the notification from the LMF to the AMF, for example, signaling of Nlmf_Location_Determine Location Response (see Non Patent Literature 25) may be used. The information about the integrity derivation result may be similar to the above (1) to (13).

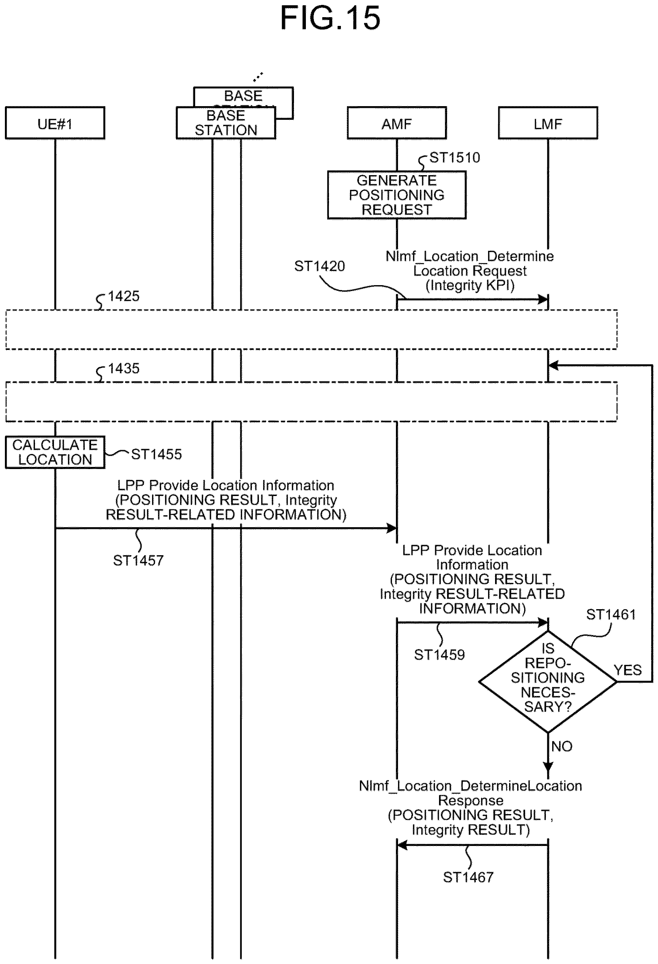

FIG. 15 is a sequence diagram illustrating another example of the positioning procedure including the notification of the information about the integrity of positioning. FIG. 15 illustrates an example of the UE-based positioning in accordance with the NI-LR. The example illustrated in FIG. 15 illustrates a case where downlink time difference of arrival is used as a method for positioning a UE. In addition, in the example illustrated in FIG. 15, similarly to the example illustrated in FIG. 14, each base station operates as a positioning signal transmission device, and UE #1 operates as a positioning signal reception device and a location calculation device. In FIG. 15, processes similar to those in FIG. 14 are denoted by the same numbers as those therein, and a common description will be omitted.

In step ST1510 illustrated in FIG. 15, a positioning request for UE #1 is generated in the AMF. The generation of the request may mean that the request is generated by the AMF itself, or may mean that there is a positioning request from another device, for example, the OAM to the AMF. Step ST1420 is similar to that in FIG. 14.

Procedure 1425, procedure 1435, and steps ST1455 to ST1467 illustrated in FIG. 15 are similar to those in FIG. 14.

Although FIG. 15 illustrates the example in which the LMF determines the necessity of the repositioning, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST1457 and ST1459. Consequently, for example, it is possible to reduce the amount of processing of the LMF.

Although FIG. 15 illustrates the case where DL-TDOA is used, downlink angle of departure may be used, or another positioning method may be used. For example, it is possible to ensure integrity also in positioning using DL-AoD.

The derivation and/or notification of the information about the integrity of positioning may be performed in positioning in accordance with a mobile-originated location request (MO-LR). A source of a location request may be the UE to be positioned. The UE may make the location request to the LMF. The request may be made via the AMF.

The UE may notify the LMF of the information about the integrity KPI. The notification may be included in the location request, for example. The notification may be performed via the AMF. For example, signaling of signaling of MO-LR Request (see Non Patent Literature 25) may be used for the notification. For the notification from the AMF to the LMF, for example, signaling of Nlmf_Location _Determine Location Request (see Non Patent Literature 25) may be used.

The LMF may notify the UE of the integrity assistance data. The notification may be applied to UE-based positioning. The notification may be included, for example, in signaling of LPP Provide Assistance Data (see Non Patent Literature 32) or signaling of LPP Request Location Information (see Non Patent Literature 32). Information included in the integrity assistance data in UE-based positioning of the MO-LR may be similar to that in the integrity assistance data in the UE-based positioning of the MT-LR and/or the NI-LR described above.

The LMF may notify the UE of the information about the integrity derivation result. The notification may be included in a response to the location request, for example. The notification may be performed via the AMF. For the notification from the LMF to the AMF, for example, signaling of Nlmf_Location_Determine Location Response (see Non Patent Literature 25) may be used. For the notification from the AMF to the UE, for example, signaling of MO-LR Response (see Non Patent Literature 25) may be used. The information about the integrity derivation result may be similar to the above (1) to (13).

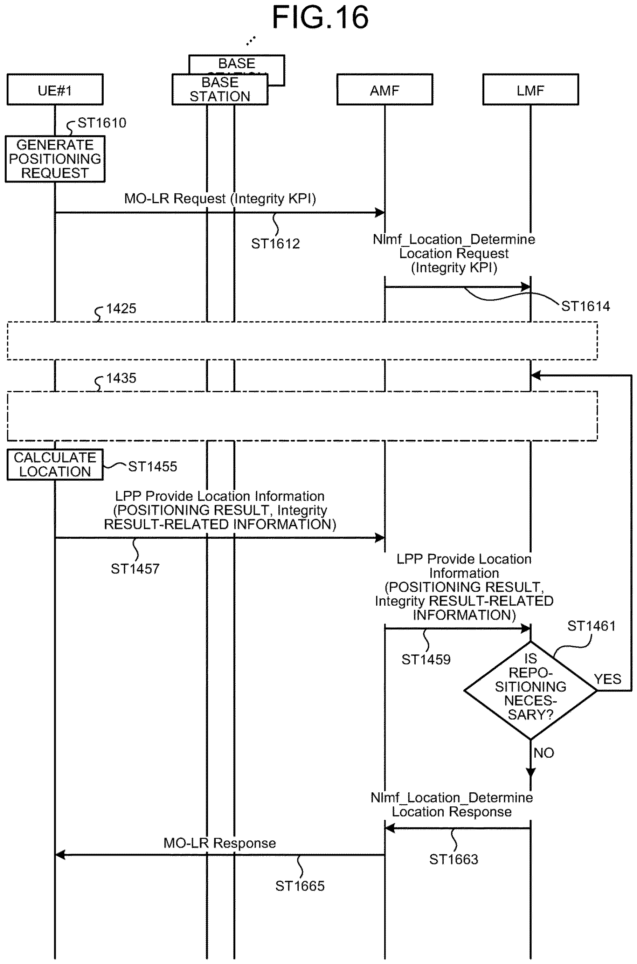

FIG. 16 is a sequence diagram illustrating another example of the positioning procedure including the notification of the information about the integrity of positioning. FIG. 16 illustrates an example of UE-based positioning in accordance with the MO-LR. The example illustrated in FIG. 16 illustrates a case where downlink time difference of arrival is used as a method for positioning a UE. In addition, in the example illustrated in FIG. 16, similarly to the example illustrated in FIG. 14, each base station operates as a positioning signal transmission device, and UE #1 operates as a positioning signal reception device and a location calculation device. In FIG. 16, processes similar to those in FIG. 14 are denoted by the same numbers as those therein, and a common description will be omitted.

In step ST1610 illustrated in FIG. 16, a positioning request for UE #1 is generated in UE #1. In steps ST1612 and ST1614, UE #1 makes a request to the LMF for positioning. The request is made via the AMF. Step ST1612 indicates the request from UE #1 to the AMF, and step ST1614 indicates the request from the AMF to the LMF.

Procedure 1425, procedure 1435, and steps ST1455 to ST1461 illustrated in FIG. 16 are similar to those in FIG. 14.

In steps ST1663 and ST1665 illustrated in FIG. 16, the LMF notifies UE #1 of completion of the positioning. The notification is performed via the AMF. Step ST1663 indicates the notification from the LMF to the AMF, and step ST1665 indicates the notification from the AMF to UE #1.

Although FIG. 16 illustrates the example in which the LMF determines the necessity of the repositioning, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST1457 and ST1459. Consequently, for example, it is possible to reduce the amount of processing of the LMF.

In FIG. 16, the notifications in steps ST1663 and ST1665 may not be performed. UE #1 may determine that the positioning is completed as triggered by the repositioning being not performed. Consequently, for example, it is possible to reduce the amount of signaling in the communication system.

Although FIG. 16 illustrates the case where DL-TDOA is used, downlink angle of departure may be used, or another positioning method may be used. For example, it is possible to ensure integrity also in positioning using DL-AoD.

The integrity KPI and/or the integrity assistance data may be given commonly among UEs, or may be given individually to the UEs. For example, the integrity KPI and/or the integrity assistance data given commonly among the UEs makes it possible to avoid complexity in the communication system. As another example, the integrity KPI and/or the integrity assistance data given individually to the UEs makes it possible to improve flexibility in the communication system.

In the derivation of the integrity, a positioning result of another UE may be used, integrity assistance data of another UE may be used, or both of the above may be used. The derivation may be performed by the UE to be positioned or the LMF. Consequently, for example, the derivation of the integrity of positioning can be promptly executed.

According to the first embodiment, it is possible to derive the integrity using the integrity assistance data also in the RAT-dependent positioning, and as a result, it is possible to ensure the integrity of the RAT-dependent positioning.

### First Modification of First Embodiment.

In UE-assisted positioning (positioning in which the LMF or the like performs a location calculation by using assistance information (e.g., positioning signal reception results) from the UE), transmission/reception of integrity assistance data may be performed.

The UE may notify the LMF of the integrity assistance data. The notification may be performed in the UE-assisted positioning. The notification may be performed via the AMF. The notification may be included in a notification of positioning signal reception results, for example. The notification of the integrity assistance data may be included, for example, in signaling of LPP Provide Location Information (see Non Patent Literature 32).

The LMF may request the integrity assistance data from the UE. The request may be made via the AMF. The request may be included, for example, in signaling of LPP Request Location Information (see Non Patent Literature 32). The UE may notify the LMF of the integrity assistance data as triggered by the request.

Each base station may notify the LMF of the integrity assistance data. The notification may be included in a notification of positioning signal reception results, for example. The notification of the integrity assistance data may be performed by using, for example, signaling of NRPPa POSITIONING INFORMATION RESPONSE (see Non Patent Literature 24), or signaling of NRPPa TRP INFORMATION RESPONSE (see Non Patent Literature 24).

The LMF may request the integrity assistance data from the base station. For the request, for example, signaling of NRPPa POSITIONING INFORMATION REQUEST (see Non Patent Literature 24) may be used, or signaling of NRPPa TRP INFORMATION REQUEST (see Non Patent Literature 24) may be used. The base station may notify the LMF of the integrity assistance data as triggered by the request from the LMF.

The base station and the UE may together notify the LMF of the integrity assistance data. Consequently, for example, the LMF can derive the integrity more accurately.

The integrity assistance data may include information about the location of the base station or the like. The information may be similar to the information disclosed in the first embodiment, for example. For example, the base station may notify the LMF of the information.

The integrity assistance data may include information about time and/or a clock of the base station or the like. The information may be similar to the information disclosed in the first embodiment, for example. For example, the base station may notify the LMF of the information.

The integrity assistance data may include information about time and/or a clock of the UE. The information may be used in the RAT-dependent positioning, for example. The information may be, for example, information about an error in the time of the UE, information about accuracy of the time of the UE, information about jitter of the clock of the UE, or information about a frequency deviation of the clock of the UE, for example, a value of the frequency deviation, and/or information about a frequency deviation drift. For example, the UE may notify the LMF of the information.

The integrity assistance data may include some or all of the information about the above (3) to (13). For example, the UE may notify the LMF of the information.

The integrity assistance data may be included in a measurement report. The base station may transfer the information to the LMF. Consequently, for example, it is possible to reduce the amount of signaling between the base station and the UE.

The UE may notify the LMF of the information about the integrity KPI. The notification may be performed, for example, via the AMF. The notification from the UE to the AMF may be included, for example, in signaling of MO-LR Request. The notification from the AMF to the LMF may be included, for example, in Nlmf_Location_Determine Location Request. The information about the integrity KPI may be similar to the information disclosed in the first embodiment.

The LMF may notify the UE of information about an integrity derivation result. The notification may be performed via the AMF. The notification may be included in the notification of the positioning result, for example. For the notification from the LMF to the AMF, for example, signaling of Nlmf_Location_Determine Location Response may be used. For the notification from the AMF to the UE, for example, signaling of MO-LR Response may be used.

The information about the integrity derivation result may include some or all of the information about the above (1) to (13).

The LMF may determine the necessity of repositioning by using the integrity assistance data and/or the information about the integrity derivation result. The LMF may make a request to the base station for the repositioning. The request may include some or all of the information about the integrity derivation result which the UE has notified the LMF of. The base station may perform the scheduling of positioning signals by using the information. Consequently, for example, the reception quality of positioning signals in the UE and/or the base station can be improved, and as a result, the integrity of positioning can be improved.

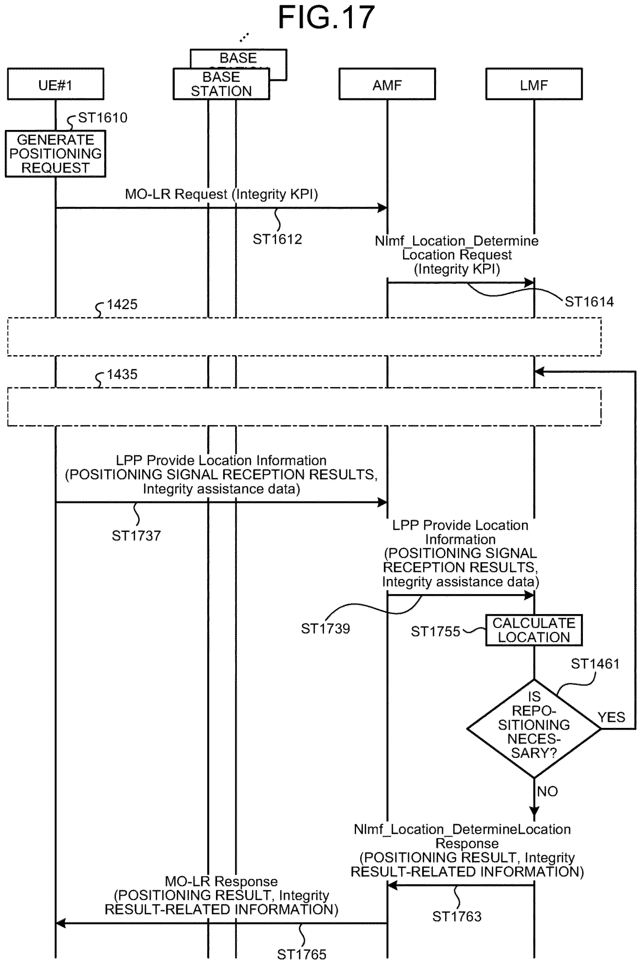

FIG. 17 is a sequence diagram illustrating an example of a positioning procedure including a notification of information about the integrity of positioning. FIG. 17 illustrates an example of UE-assisted positioning in accordance with the MO-LR. The example illustrated in FIG. 17 illustrates a case where DL-TDOA is used as a method for positioning a UE. In addition, in the example illustrated in FIG. 17, each base station operates as a positioning signal transmission device, UE #1 operates as a positioning signal reception device, and a host device including the LMF operates as a location calculation device. In FIG. 17, processes similar to those in FIGS. 14 and 16 are denoted by the same numbers as those therein, and a common description will be omitted.

Steps ST1610 to ST1614 illustrated in FIG. 17 are similar to those in FIG. 16.

Procedure 1425 and procedure 1435 illustrated in FIG. 17 are similar to those in FIG. 14.

In steps ST1737 and ST1739 illustrated in FIG. 17, UE #1 notifies the LMF of positioning signal reception results. The notification may include the integrity assistance data. The notification is performed via the AMF. Step ST1737 indicates the notification from UE #1 to the AMF, and step ST1739 indicates the notification from the AMF to the LMF. Signaling of LPP Provide Location Information may be used for the notification in step ST1737 and/or step ST1739.

In step ST1755 illustrated in FIG. 17, the LMF calculates the location of UE #1. The LMF may perform the calculation by using the positioning signal reception results which the LMF has been notified of in step ST1739. The LMF may derive the integrity of a calculated positioning result (location information). The integrity assistance data of which the notification has been performed in step ST1739 may be used to derive the integrity.

Step ST1461 illustrated in FIG. 17 is similar to that in FIG. 14.

In steps ST1763 and ST1765 illustrated in FIG. 17, the LMF notifies UE #1 of the positioning result. The notification is performed via the AMF. The notification may include the information about the integrity result. Step ST1763 indicates the notification from the LMF to the AMF, and step ST1765 indicates the notification from the AMF to UE #1.

Although FIG. 17 illustrates the case where DL-TDOA is used, DL-AoD may be used, multi-RTT may be used, or NR enhanced cell ID (NR E-CID) may be used. Each base station may notify the LMF of information about the positioning signal reception results. Each base station may transmit the integrity assistance data to the LMF. Consequently, for example, it is possible to ensure integrity also in another positioning method.

The derivation and/or notification of the information about the integrity of positioning may be performed in UE-assisted positioning of the MT-LR. A source of a location request may be the AMF or the OAM. The OAM may make the location request via the AMF.

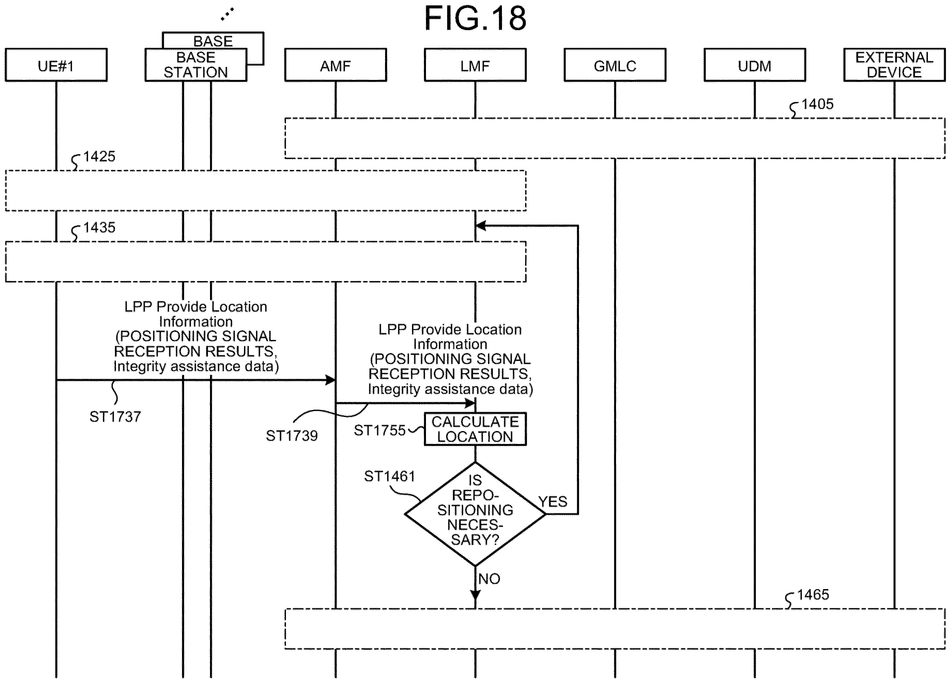

FIG. 18 is a sequence diagram illustrating another example of the positioning procedure including the notification of the information about the integrity of positioning. FIG. 18 illustrates an example of UE-assisted positioning in accordance with the MT-LR. The example illustrated in FIG. 18 illustrates a case where downlink time difference of arrival is used as a method for positioning a UE. In addition, in the example illustrated in FIG. 18, similarly to the example illustrated in FIG. 17, each base station operates as a positioning signal transmission device, UE #1 operates as a positioning signal reception device, and a host device including the LMF operates as a location calculation device. In FIG. 18, processes similar to those in FIGS. 14, 16, and 17 are denoted by the same numbers as those therein, and a common description will be omitted.

Procedure 1405, procedure 1425, and procedure 1435 illustrated in FIG. 18 are similar to those in FIG. 14.

Steps ST1737, ST1739, and ST1755 illustrated in FIG. 18 are similar to those in FIG. 17. Step ST1461 is similar to that in FIG. 14.

Procedure 1465 illustrated in FIG. 18 is similar to that in FIG. 14.

Although FIG. 18 illustrates the case where DL-TDOA is used, DL-AoD may be used, multi-RTT may be used, or NR E-CID may be used. Each base station may notify the LMF of information about the positioning signal reception results. Each base station may transmit the integrity assistance data to the LMF. Consequently, for example, it is possible to ensure integrity also in another positioning method.

The derivation and/or notification of the information about the integrity of positioning may be performed in UE-assisted positioning of the NI-LR. A source of a location request may be the AMF, the OAM, or a UE not to be positioned. The OAM may make the location request via the AMF. The UE not to be positioned may make the location request via the AMF.

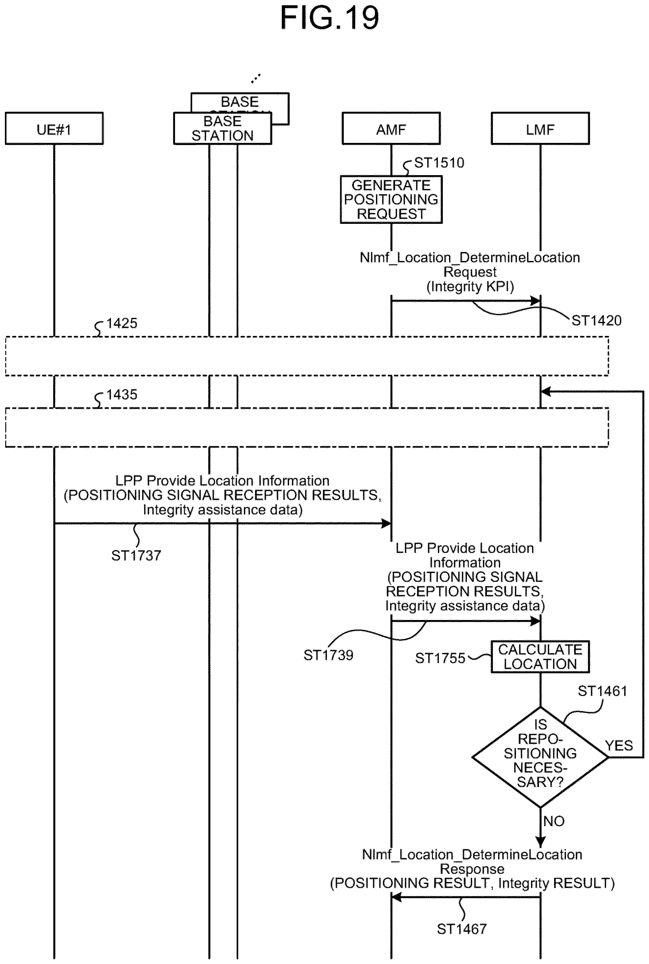

FIG. 19 is a sequence diagram illustrating another example of the positioning procedure including the notification of the information about the integrity of positioning. FIG. 19 illustrates an example of UE-assisted positioning in accordance with the NI-LR. The example illustrated in FIG. 19 illustrates a case where DL-TDOA is used as a method for positioning a UE. In addition, in the example illustrated in FIG. 19, similarly to the example illustrated in FIG. 17, each base station operates as a positioning signal transmission device, UE #1 operates as a positioning signal reception device, and a host device including the LMF operates as a location calculation device. In FIG. 19, processes similar to those in FIGS. 14, 15, and 17 are denoted by the same numbers as those therein, and a common description will be omitted.

Step ST1510 illustrated in FIG. 19 is similar to that in FIG. 15. Step ST1420 is similar to that in FIG. 14.

Procedure 1425 and procedure 1435 illustrated in FIG. 19 are similar to those in FIG. 14.

Steps ST1737, ST1739, and ST1755 illustrated in FIG. 19 are similar to those in FIG. 17. Step ST1461 is similar to that in FIG. 14.

Step ST1467 illustrated in FIG. 19 is similar to that in FIG. 14.

Although FIG. 19 illustrates the case where DL-TDOA is used, DL-AoD may be used, multi-RTT may be used, or NR E-CID may be used. Each base station may notify the LMF of information about the positioning signal reception results. Each base station may transmit the integrity assistance data to the LMF. Consequently, for example, it is possible to ensure integrity also in another positioning method.

The method disclosed in the first embodiment and/or the first modification may be used in NG-RAN node-assisted positioning (see Non Patent Literature 24). The NG-RAN node-assisted positioning may be, for example, MO-LR positioning, NI-LR positioning, or MT-LR positioning. For the positioning, for example, a plurality of RTTs may be used, NR E-CID may be used, uplink time difference of arrival (UL-TDOA) may be used, uplink angle of arrival (UL-AoA) may be used, or another positioning method may be used. Each base station may notify the LMF of the integrity assistance data. The notification may be included in a notification of positioning signal reception results, for example. Consequently, for example, it is possible to ensure the integrity of positioning also in the NG-RAN node-assisted positioning.

The data which the base station notifies the LMF of may include information about a path between the base station and the UE to be positioned. The information may be, for example, information indicating whether the path is LOS or NLOS or information about a ratio between LOS and NLOS in a plurality of positioning signal transmissions/receptions, or may include information about path loss of the path. A location calculation subject, for example, the LMF may derive the integrity of positioning by using the data.

According to the first modification, it is possible to ensure the integrity of positioning also in UE-assisted positioning and/or NG-RAN node-assisted positioning.

### Second Embodiment.

Integrity may be derived in positioning using sidelink communication (hereinafter, sometimes referred to as sidelink positioning). The positioning may be, for example, UE-based positioning. The positioning may be, for example, positioning by the MT-LR, positioning by the MO-LR, or positioning by the NI-LR. The positioning by the NI-LR may include positioning by a request from a UE not to be positioned. The positioning by the request from the UE not to be positioned may be included in the MT-LR.

An LMF may notify a UE of integrity assistance data. The notification may be performed, for example, via a UE present in the coverage of a cell of a base station (hereinafter, sometimes referred to as an intra-coverage UE). The notification between the LMF and the UE via the intra-coverage UE may be performed, for example, in a case where a UE to be positioned is present outside the coverage of the base station, in a case where the UE to be positioned is present in the coverage of the base station, or in a case where the UE to be positioned is present in the coverage of a base station different from the base station in the coverage of which the intra-coverage UE is present. The notification from the LMF to the intra-coverage UE may be included, for example, in signaling of LPP Provide Assistance Data (see Non Patent Literature 32), or signaling of LPP Request Location Information (see Non Patent Literature 32). The intra-coverage UE may notify the UE to be positioned of the assistance data. The notification from the intra-coverage UE to the UE to be positioned may be performed, for example, by using signaling of LPP Provide Assistance Data, or signaling of LPP Request Location Information.

The intra-coverage UE may be, for example, a relay UE. Consequently, for example, it is possible to reduce the amount of processing involved with the termination of signaling in the communication system.

The LMF and/or an AMF may determine a base station used for a notification of the integrity assistance data to the UE to be positioned. The determination may be made, for example, in a case where the UE to be positioned is present in the coverage of a base station different from the base station in the coverage of which the intra-coverage UE is present. The LMF and/or the AMF may use, for the determination, the situation of a neighbor base station, the situation of a UE served thereby, or other information. Consequently, for example, it is possible to select a base station that serves many neighbor UEs in the positioning of the UE, and as a result, positioning precision can be improved.

The integrity assistance data may include information about the location of a positioning UE (a UE that faces the UE to be positioned and transmits and receives positioning signals). The information may be used in the sidelink positioning, for example. The information may be, for example, information about an error in the location of the positioning UE, information about a fluctuation in the location of the positioning UE, or may include information about a moving speed of the positioning UE, or information about the integrity of a positioning result of the positioning UE. For example, by including the information about the fluctuation in the location of the positioning UE and/or the moving speed thereof, it is possible to ensure the integrity of positioning of the UE to be positioned also in a case where the positioning is performed by using the positioning UE.

The integrity assistance data may include information about time and/or a clock of the positioning UE. The information may be used in the sidelink positioning, for example. The information may be, for example, information about an error in time of the UE to be positioned, information about accuracy of the time of the positioning UE, information about jitter of the clock of the positioning UE, or standard deviation of a clock period of the positioning UE.

The integrity assistance data may include information about the location of the base station or the like. The information may be used in the RAT-dependent positioning, for example. The information may be, for example, information about an error in the location of the base station, information about a fluctuation of the location of the base station or the like, or may include information about a moving speed of the base station or the like. Consequently, for example, also in a case where a sidelink and a downlink and/or an uplink with the base station or the like are used in combination in the positioning of the UE, the integrity of the positioning of the UE can be ensured.

The integrity assistance data may include information about time and/or a clock of the base station or the like. The information may be used in the RAT-dependent positioning, for example. The information may be, for example, information about an error in time of the base station, information about accuracy of the time of the base station, information about jitter of a clock of the base station, or information about standard deviation of a clock period of the base station. Consequently, for example, an effect similar to that described above is obtained.

The integrity assistance data may include information about a cell of the base station or the like, for example, an identifier of the cell, information about a carrier of the base station or the like, information about a CC of the base station or the like, information about a beam, for example, a beam identifier, information about an antenna port, for example, a port number, information about a TCI state, or information about QCL. The above information may be, for example, the information related to a positioning signal, the information related to the entirety of candidates for resources of the positioning signal, or the information about a whole or a part of resources of the base station or the like. The UE may use the information to derive the integrity. Consequently, for example, an effect similar to that described above is obtained.

The LMF may acquire integrity assistance data about the positioning UE. The LMF may acquire the data in positioning of the positioning UE, for example.

As another example, the LMF may request the integrity assistance data from the positioning UE. For the request, for example, signaling of LPP Request Assistance Data (see Non Patent Literature 32) may be used. The request may include, for example, information about the assistance data (e.g., the type of data). The positioning UE may notify the LMF of the data. For the notification of the data, for example, signaling of LPP Provide Assistance Data (see Non Patent Literature 32) may be used.

As another example, the LMF may request the data via the base station. For the request, the LMF may use, for example, signaling of NRPPa POSITIONING INFORMATION REQUEST (see Non Patent Literature 34). The signaling may include information about the UE as a destination of the request, or may include information about the integrity assistance data to be requested (e.g., the type of data). The base station may request the data from the positioning UE. The request from the base station to the positioning UE may be made via the intra-coverage UE. For example, in a case where the positioning UE is present outside the coverage of the base station, the request may be made via the intra-coverage UE. For the request, for example, RRC signaling may be used. The request may include information about the integrity assistance data to be requested (e.g., the type of data). The positioning UE may notify the base station of the data. The notification from the positioning UE to the base station may be performed by using, for example, RRC signaling. The notification from the positioning UE to the base station may be performed via the intra-coverage UE. The base station may notify the LMF of the data. For the notification from the base station to the LMF, for example, signaling of NRPPa POSITIONING INFORMATION RESPONSE (see Non Patent Literature 34) may be used. The notification from the base station to the LMF may include information about the positioning UE (e.g., an identifier of the UE), or information about the integrity assistance data of which the notification has been performed (e.g., the type of data).

The LMF may determine the positioning UE by using the data. The LMF may acquire the integrity assistance data from a UE to be a candidate for the positioning UE, or may request the integrity assistance data from the UE to be a candidate for the positioning UE. Consequently, for example, it is possible to improve the integrity of positioning of the UE to be positioned by preferentially employing, as the positioning UE, a UE of which a positioning result exhibits good integrity.

A positioning requesting device may notify the LMF of the information about the integrity KPI. The notification may be included, for example, in signaling of location request. The positioning requesting device may be, for example, an external device, the AMF, the UE, or an CAM device.

The notification may be performed in positioning in accordance with the MT-LR, for example. The notification may be performed similarly to the first embodiment, for example. The information included in the integrity KPI may be similar to that in the first embodiment.

The LMF may make a request to the UE to be positioned for a positioning capability. The request may be made via the intra-coverage UE. For the request, for example, signaling of LPP request capabilities (see Non Patent Literature 32) may be used. The request from the LMF to the intra-coverage UE may include information about the UE to be positioned (e.g., an identifier). Consequently, for example, the intra-coverage UE can promptly know the UE to which the request for the capability is made.

The intra-coverage UE may notify the UE to be positioned of the request. For the request, for example, signaling of LPP request capabilities (see Non Patent Literature 32) may be used. The UE to be positioned may notify the LMF of the positioning capability as triggered by the request. The notification may be performed via the intra-coverage UE. For the notification from the UE to be positioned to the intra-coverage UE, for example, signaling of LPP provide capabilities (see Non Patent Literature 32) may be used. The intra-coverage UE may notify the LMF of the positioning capability. For the notification from the intra-coverage UE to the LMF, for example, signaling of LPP provide capabilities (see Non Patent Literature 32) may be used.

The LMF may make a location request to the UE to be positioned. The request may be made via the intra-coverage UE. For the request, for example, signaling of LPP request location information (see Non Patent Literature 32) may be used. The request from the LMF to the intra-coverage UE may include information about the UE to be positioned (e.g., an identifier). Consequently, for example, the intra-coverage UE can promptly know the UE to be positioned.

The intra-coverage UE may notify the UE to be positioned of the request. For the request, for example, signaling of LPP request location information (see Non Patent Literature 32) may be used. The UE to be positioned may start positioning of the UE to be positioned as triggered by the request.

The UE to be positioned may notify the LMF of information about a positioning result. The notification may be performed via the intra-coverage UE. For the notification, for example, signaling of LPP provide location information (see Non Patent Literature 32) may be used. The intra-coverage UE may notify the LMF of the information. For the notification from the intra-coverage UE to the LMF, for example, signaling of LPP provide location information (see Non Patent Literature 32) may be used.

The notification may include information about a positioning integrity derivation result. The information may be information similar to the (1) to (13) disclosed in the first embodiment.

For example, in the information of the above (3) and/or (4), the positioning signal sources/destinations may be positioning UEs. As another example, regarding the information of the above (10), an adverse event by a positioning UE may be included. A condition for determining the presence or absence of the adverse event by the positioning UE may be determined in a standard, or may be determined by the LMF and the LMF may notify the UE to be positioned thereof.

The UE may perform a notification of the information about the integrity derivation result together with a result of each positioning. Consequently, for example, the LMF can promptly acquire the information.

As another example, the notification may be performed periodically, or may be performed in a case where a predetermined condition is satisfied. The predetermined condition may include a case where there is a change greater than, or equal to or greater than a predetermined value from a previous integrity derivation result. As another example, the notification of the information may be performed as triggered by a KPI change from the LMF. The period and/or the predetermined condition may be defined in a standard, or the LMF, the AMF, and/or the base station may determine the period and/or the predetermined condition and notify the UE thereof. Consequently, for example, it is possible to reduce the amount of signaling between the UE and the LMF.

The LMF may notify the AMF of the information about the integrity derivation result. The information may be included, for example, in signaling of Nlmf_Location_Determine Location Response (see Non Patent Literature 25). The AMF may notify the external device of the information. The notification from the AMF to the external device may be performed via a GMLC.

The LMF may determine the necessity of repositioning by using the information about the integrity derivation result which the UE has notified the LMF of.
The LMF may make a request to the base station for the repositioning. The request may include some or all of the information about the integrity derivation result which the UE has notified the LMF of. The base station may perform the scheduling of positioning signals by using the information. Consequently, for example, the reception quality of positioning signals in the UE and/or the base station can be improved, and as a result, the integrity of positioning can be improved.

The LMF may request the base station to determine resources of a positioning signal. The request may include a request for the integrity assistance data. For the request, for example, signaling of NRPPa POSITIONING INFORMATION REQUEST (see Non Patent Literature 34) may be used. The base station may notify the LMF of information about the resources of the positioning signal. The notification may include the information about the integrity assistance data. The assistance data may be, for example, integrity assistance data on the base station. For the notification, for example, signaling of NRPPa POSITIONING INFORMATION RESPONSE (see Non Patent Literature 34) may be used.

The LMF may make a request to the base station for start of positioning signal transmission by the UE. The base station may make a request to the UE for start of positioning signal transmission. The UE may start the positioning signal transmission as triggered by the request. The base station may notify the LMF of a response to the request. The response may be, for example, a notification indicating completion of the start of the positioning signal transmission.

The LMF may give the base station an instruction on stop of the positioning signal transmission by the UE. The instruction may be given, for example, after completion of the positioning of the UE. The base station may instruct the UE to stop the positioning signal transmission. The UE may stop the positioning signal transmission as triggered by the instruction.

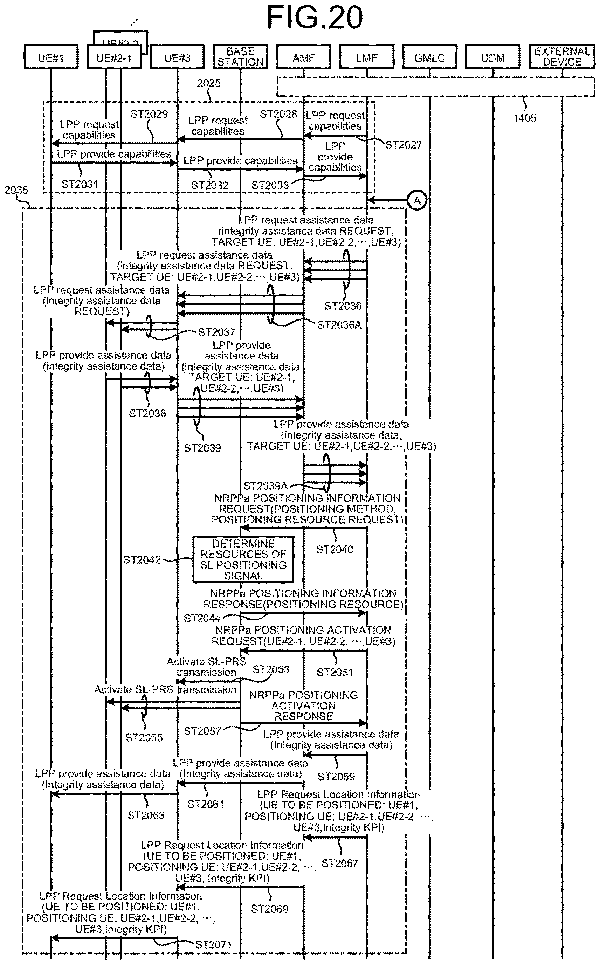

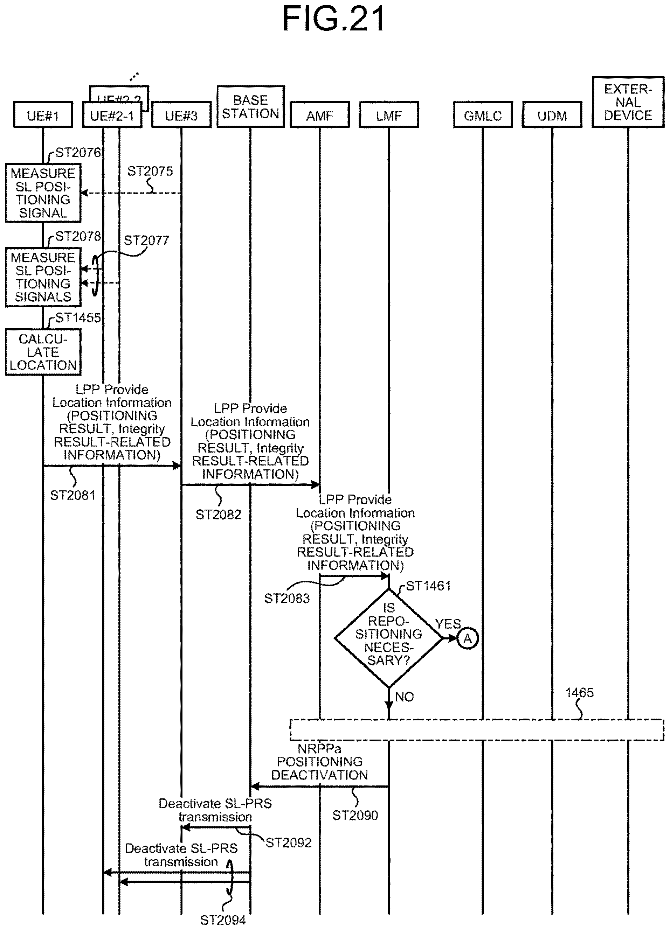

FIGS. 20 and 21 are each a diagram of a sequence illustrating an example of a positioning procedure including a notification of information about the integrity of positioning. FIG. 20 illustrates a first half of the sequence, and FIG. 21 illustrates a second half of the sequence. FIGS. 20 and 21 illustrate an example of UE-based positioning in accordance with the MT-LR. In the example illustrated in FIGS. 20 and 21, it is assumed that UE #1 corresponds to a UE to be positioned, UE #2-1, UE #2-2, ... correspond to positioning UEs (hereinafter, UE #2-1, UE #2-2, ... are sometimes referred to as a UE #2 group), and UE #3 corresponds to an intra-coverage UE. UE #3 may operate as a positioning UE. In the example illustrated in FIGS. 20 and 21, it is assumed that UE #3 also serves as a positioning UE. The example illustrated in FIGS. 20 and 21 illustrates a case where a method using sidelink positioning signal time difference of arrival which is a difference in arrival time of positioning signals from respective positioning UEs to a UE to be measured (hereinafter, sometimes referred to as sidelink positioning signals) is applied as a method for positioning a UE. In addition, in the example illustrated in FIGS. 20 and 21, the UE #2 group and UE #3 are employed as first communication terminals, and the UE #2 group and UE #3 operate as positioning signal transmission devices. UE #1 is employed as a second communication terminal, and UE #1 operates as a positioning signal reception device and a location calculation device. In FIGS. 20 and 21, processes similar to those in FIG. 14 are denoted by the same numbers as those therein, and a common description will be omitted.

Procedure 1405 illustrated in FIG. 20 is similar to that in FIG. 14.

In procedure 2025 illustrated in FIG. 20, a positioning capability acquisition operation for UE #1 by the LMF is performed. In steps ST2027, ST2028, and ST2029, the LMF makes a request to UE #1 for a positioning capability. In the example illustrated in FIG. 20, the request is made via the AMF and UE #3. Step ST2027 indicates the request from the LMF to the AMF, step ST2028 indicates the request from the AMF to UE #3, and step ST2029 indicates the request from UE #3 to UE #1. In steps ST2031, ST2032 and ST2033, UE #1 notifies the LMF of the positioning capability. In the example illustrated in FIG. 20, the notification is performed via UE #3 and the AMF. Step ST2031 indicates the notification from UE #1 to UE #3, step ST2032 indicates the notification from UE #3 to the AMF, and step ST2033 indicates the notification from the AMF to the LMF.

In procedure 2035 illustrated in FIG. 20, positioning configuration is performed among UE #1, the UE #2 group, UE #3, the base station, the LMF, and the LMF. In steps ST2036, ST2036A, and ST2037, the LMF requests positioning assistance data from the UE #2 group and UE #3. The request may be made via the AMF and UE #3. Step ST2036 indicates the request from the LMF to the AMF, step ST2036A indicates the request from the AMF to UE #3, and step ST2037 indicates the request from UE #3 to the UE #2 group. The request may include a request for the integrity assistance data. The request may include information about the integrity assistance data to be requested, for example, information about the type thereof. The request may include information about the UE to which the request is made, for example, an identifier. The request may include, for example, signaling of LPP request assistance data. In steps ST2038, ST2039, and ST2039A, the UE #2 group and UE #3 notify the LMF of the positioning assistance data. The notification may be performed via UE #3 and the AMF. Step ST2038 indicates the notification from the UE #2 group to UE #3, step ST2039 indicates the notification from UE #3 to the AMF, and step ST2039A indicates the notification from the AMF to the LMF. The notification may include the integrity assistance data. The notification may include the information about a UE related to the integrity assistance data, for example, an identifier of the UE. The notification may include, for example, signaling of LPP provide assistance data.

In step ST2040 illustrated in FIG. 20, the LMF makes a request to the base station for information about resources of a positioning signal. For the request, for example, signaling of NRPPa POSITIONING INFORMATION REQUEST (see Non Patent Literature 34) may be used. A request for the integrity assistance data may be included in step ST2040. In step ST2042, the base station determines resources of a sidelink positioning signal. In step ST2044, the base station notifies the LMF of the information about the resources of the positioning signal. The notification may include the integrity assistance data. The assistance data may be, for example, integrity assistance data on the base station.

In step ST2051 illustrated in FIG. 20, the LMF makes a request to the base station for start of positioning signal transmission from the UE #2 group and UE #3. For the request, for example, signaling of NRPPa POSITIONING ACTIVATION REQUEST (see Non Patent Literature 34) may be used. The request may include information about UEs that start positioning signal transmission. In steps ST2053 and ST2055, the base station requests UE #3 and the UE #2 group to start positioning signal transmission. Step ST2053 indicates the request to UE #3, and step ST2055 indicates the request to the UE #2 group. The UE #2 group and UE #3 start the positioning signal transmission by using the request. In step ST2057, the base station notifies the LMF of completion of the start of the positioning signals. For the notification, for example, signaling of NRPPa POSITIONING ACTIVATION RESPONSE (see Non Patent Literature 34) may be used.

In steps ST2059, ST2061, and ST2063 illustrated in FIG. 20, the LMF notifies UE #1 of positioning assistance data. In the example illustrated in FIG. 20, the notification is performed via the AMF and UE #3. Step ST2059 indicates the notification from the LMF to the AMF, step ST2061 indicates the notification from the AMF to UE #3, and step ST2063 indicates the notification from UE #3 to UE #1. For example, signaling of LPP provide assistance data (see Non Patent Literature 32) may be used for the notification. The notification may include positioning assistance information, for example, information about the location of the base station and/or information about time of the base station, or may include information about the integrity assistance data.

In steps ST2067, ST2069, and ST2071 illustrated in FIG. 20, the LMF requests positioning-related information from UE #1. In the example illustrated in FIG. 20, the request is made via the AMF and UE #3. Step ST2067 indicates the notification from the LMF to the AMF, step ST2069 indicates the notification from the AMF to UE #3, and step ST2071 indicates the notification from UE #3 to UE #1. For example, signaling of LPP Request Location Information (see Non Patent Literature 32) may be used for the request. The request may include information about the positioning method, information about resources of a positioning signal to be transmitted by the base station to UE #1, the information about the integrity KPI, or information about the UE to be positioned and the positioning UEs.

In step ST2075 illustrated in FIG. 21, UE #3 transmits a positioning signal to UE #1. For example, an SL-positioning reference signal (PRS) (see Non Patent Literature 35) may be used for the signal. In step ST2076, UE #1 receives the positioning signal from UE #3.

In step ST2077 illustrated in FIG. 21, the UE #2 group transmits positioning signals to UE #1. For example, SL-positioning reference signals (PRSs) (see Non Patent Literature 35) may be used for the signals. In step ST2078, UE #1 receives the positioning signals from the UE #2 group.

Step ST1455 illustrated in FIG. 21 is similar to that in FIG. 14.

In steps ST2081, ST2082, and ST2083 illustrated in FIG. 21, UE #1 notifies the LMF of a positioning result. In the example illustrated in FIG. 21, the notification is performed via UE #3 and the AMF. Step ST2018 indicates the notification from UE #1 to UE #3, step ST2082 indicates the notification from UE #3 to the AMF, and step ST2083 indicates the notification from the AMF to the LMF. The notification may include the positioning result, or information about a derived integrity result.

Step ST1461 illustrated in FIG. 21 is similar to that in FIG. 14. Procedure 1465 is similar to that in FIG. 14.

In step ST2090 illustrated in FIG. 21, the LMF gives the base station an instruction on stop of the positioning signal transmission from the UE #2 group and UE #3. For the instruction, for example, signaling of NRPPa POSITIONING DEACTIVATION (see Non Patent Literature 34) may be used. The instruction may include information about UEs that stop the positioning signal transmission. In steps ST2092 and ST2094, the base station instructs UE #3 and the UE #2 group to stop the positioning signal transmission. Step ST2092 indicates the instruction to UE #3, and step ST2094 indicates the instruction to the UE #2 group. The UE #2 group and UE #3 stop the positioning signal transmission as triggered by the instruction.

Although FIGS. 20 and 21 illustrate the example in which the LMF determines the necessity of repositioning, similarly to FIG. 14, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST2081, ST2082, and ST2083. Consequently, for example, it is possible to reduce the amount of processing of the LMF.

Although the case where the sidelink positioning signal time difference of arrival is used as the positioning method in FIGS. 20 and 21 has been described, sidelink positioning signals' angle of departure may be used, or another positioning method may be used. For example, also in a case where another positioning method is used, it is possible to ensure integrity.

UE-based positioning using a sidelink may be performed in the NI-LR. A source of a location request may be the AMF or the OAM. The OAM may make the location request via the AMF.

The AMF and/or the OAM may notify the LMF of the information about the integrity KPI. The notification may be included, for example, in signaling of location request.

The notification may be performed in positioning in accordance with the NI-LR, for example. The notification may be performed similarly to the first embodiment, for example. The information included in the integrity KPI may be similar to that in the first embodiment.

A positioning capability request and a notification of the integrity assistance data from the LMF to the UE, a notification of the information about the integrity derivation result from the UE to the LMF, and the like may be performed similarly to those described above.

The LMF may notify the AMF of the information about the integrity derivation result. The information may be included, for example, in signaling of Nlmf_Location_Determine Location Response (see Non Patent Literature 25). The LMF may perform the notification to the OAM. The notification to the OAM may be performed via the AMF.

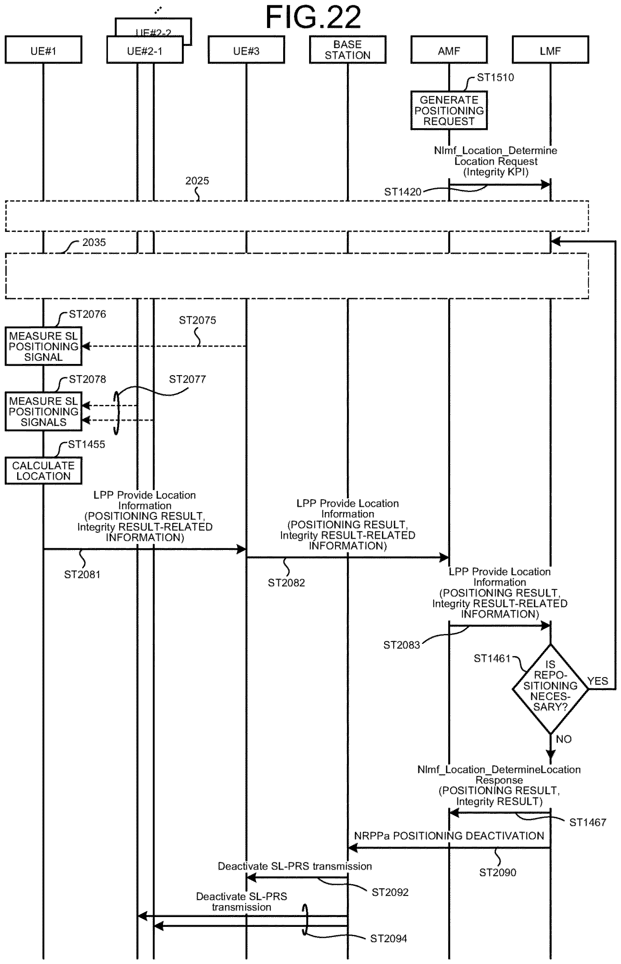

FIG. 22 is a sequence diagram illustrating another example of the positioning procedure including the notification of the information about the integrity of positioning. FIG. 22 illustrates an example of the UE-based positioning in accordance with the NI-LR. In the example illustrated in FIG. 22, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIG. 22, it is assumed that UE #3 also serves as a positioning UE. The example illustrated in FIG. 22 illustrates a case where a method using time difference of arrival of sidelink positioning signals from positioning UEs to a UE to be measured is applied as a method for positioning a UE. In addition, in the example illustrated in FIG. 22, similarly to the example illustrated in FIGS. 20 and 21, the UE #2 group and UE #3 are employed as first communication terminals, and the UE #2 group and UE #3 operate as positioning signal transmission devices. UE #1 is employed as a second communication terminal, and UE #1 operates as a positioning signal reception device and a location calculation device. In FIG. 22, processes similar to those in FIGS. 14, 15, 20, and 21 are denoted by the same numbers as those therein, and a common description will be omitted.

Step ST1510 in FIG. 22 is similar to that in FIG. 15. Step ST1420 is similar to that in FIG. 14.

Procedure 2025 and procedure 2035 in FIG. 22 are similar to those in FIG. 20.

Steps ST2075 to ST2078 in FIG. 22 are similar to those in FIG. 21. Step ST1455 is similar to that in FIG. 14. Steps ST2081 to ST2083 are similar to those in FIG. 21. Steps ST1461 and ST1467 are similar to those in FIG. 14.

Steps ST2090 to ST2094 in FIG. 22 are similar to those in FIG. 21.

Although FIG. 22 illustrates the example in which the LMF determines the necessity of repositioning, similarly to FIG. 14, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST2081, ST2082, and ST2083. Consequently, for example, it is possible to reduce the amount of processing of the LMF.

Although the case where the sidelink positioning signal time difference of arrival is used as the positioning method in FIG. 22 has been described, sidelink positioning signals' angle of departure may be used, or another positioning method may be used. For example, also in a case where another positioning method is used, it is possible to ensure integrity.

UE-based positioning using a sidelink may be performed in the MO-LR. The UE to be positioned may notify the LMF of the information about the integrity KPI. The notification may be included, for example, in signaling of location request. The UE to be positioned may perform the notification via the intra-coverage UE. For the notification from the UE to be positioned to the intra-coverage UE, for example, signaling of MO-LR Request may be used. For the notification from the intra-coverage UE to the LMF, for example, MO-LR Request may be used. The same applies to signaling of location request.

A positioning capability request and a notification of the integrity assistance data from the LMF to the UE to be positioned, a notification of the information about the integrity derivation result from the UE to be positioned to the LMF, and the like may be performed similarly to those described above.

The LMF may notify the UE to be positioned of completion of the positioning. The notification from the LMF to the UE to be positioned may be performed via the intra-coverage UE. For the notification from the LMF to the intra-coverage UE, for example, signaling of MO-LR Response may be used. For the notification from the intra-coverage UE to the UE to be positioned, for example, signaling of MO-LR Response may be used.

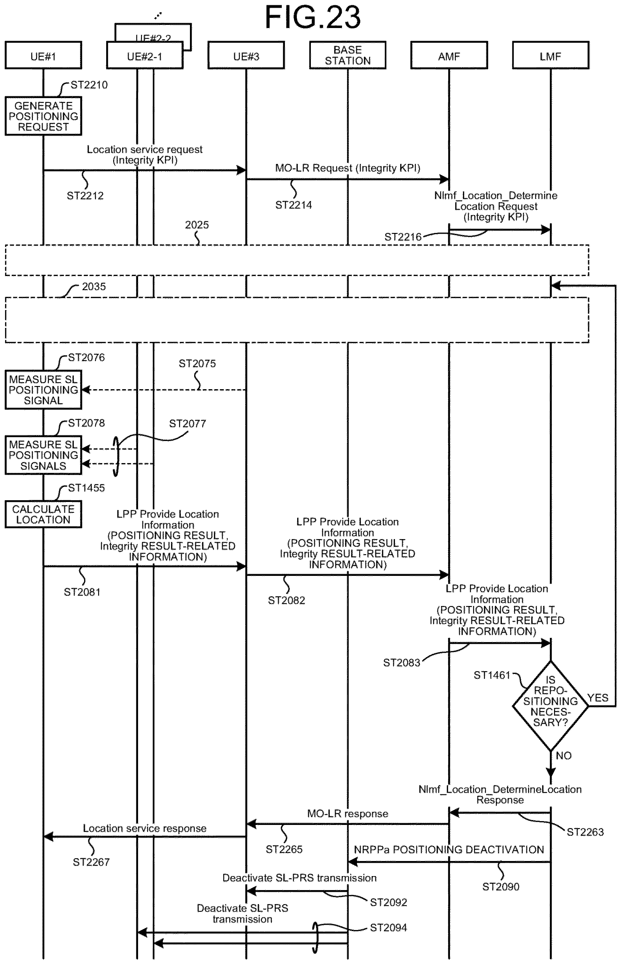

FIG. 23 is a sequence diagram illustrating another example of the positioning procedure including the notification of the information about the integrity of positioning. FIG. 23 illustrates an example of UE-based positioning in accordance with the MO-LR. In the example illustrated in FIG. 23, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIG. 23, it is assumed that UE #3 also serves as a positioning UE. The example illustrated in FIG. 23 illustrates a case where a method using time difference of arrival of sidelink positioning signals from positioning UEs to a UE to be measured is applied as a method for positioning a UE. In addition, in the example illustrated in FIG. 23, similarly to the example illustrated in FIGS. 20 and 21, the UE #2 group and UE #3 are employed as first communication terminals, and the UE #2 group and UE #3 operate as positioning signal transmission devices. UE #1 is employed as a second communication terminal, and UE #1 operates as a positioning signal reception device and a location calculation device. In FIG. 23, processes similar to those in FIGS. 14, 20, and 21 are denoted by the same numbers as those therein, and a common description will be omitted.

In step ST2210 illustrated in FIG. 23, a positioning request for UE #1 is generated in UE #1. In steps ST2212, ST2214, and ST2216, UE #1 makes a request to the LMF for positioning. The request is made via UE #3 and the AMF. Step ST2212 indicates the request from UE #1 to UE #3, step ST2214 indicates the request from UE #3 to the AMF, and step ST2216 indicates the request from the AMF to the LMF.

Procedure 2025 and procedure 2035 in FIG. 23 are similar to those in FIG. 20.

Steps ST2075 to ST2078 in FIG. 23 are similar to those in FIG. 21. Step ST1455 is similar to that in FIG. 14. Steps ST2081 to ST2083 are similar to those in FIG. 21. Step ST1461 is similar to that in FIG. 14.

In steps ST2263, ST2265, and ST2267 illustrated in FIG. 23, the LMF notifies UE #1 of completion of the positioning. The notification is performed via the AMF and UE #3. Step ST2263 indicates the notification from the LMF to the AMF, step ST2265 indicates the notification from the AMF to UE #3, and step ST2267 indicates the notification from UE #3 to UE #1.

Steps ST2090 to ST2094 in FIG. 23 are similar to those in FIG. 21.

Although FIG. 23 illustrates the example in which the LMF determines the necessity of repositioning, similarly to FIG. 14, UE #1 may determine the necessity of the repositioning. UE #1 may determine the necessity of the repositioning by using derived integrity result-related information. UE #1 may notify the LMF of information about the necessity of the repositioning. The notification of the information may be performed by using, for example, signaling of steps ST2081, ST2082, and ST2083. Consequently, for example, it is possible to reduce the amount of processing of the LMF.

In FIG. 23, the notifications in steps ST2263, ST2265, and ST2267 may not be performed. UE #1 may determine that the positioning is completed as triggered by the repositioning being not performed. Consequently, for example, it is possible to reduce the amount of signaling in the communication system.

Although the case where the sidelink positioning signal time difference of arrival is used as the positioning method in FIG. 23 has been described, sidelink positioning signals' angle of departure may be used, or another positioning method may be used. For example, also in a case where another positioning method is used, it is possible to ensure integrity.

The UE to be positioned may be an intra-coverage UE. For example, in the examples illustrated in FIGS. 20 to 23, UE #1 and UE #3 may be integrated. Consequently, for example, it is possible to promptly execute the positioning of UE #1.

According to the second embodiment, it is possible to ensure the integrity of positioning also in sidelink positioning.

### First Modification of Second Embodiment.

The derivation of the integrity disclosed in the second embodiment may be performed in UE-assisted positioning. The positioning may be, for example, the MO-LR, the MT-LR, or the NI-LR. The positioning by the NI-LR may include positioning by a request from a UE not to be positioned. The positioning by the request from the UE not to be positioned may be included in the MT-LR.

The UE to be positioned may notify the LMF of the integrity assistance data. The notification may be performed in the UE-assisted positioning. The notification may be included in a notification of positioning signal reception results, for example. The notification from the UE to be positioned to the LMF may be performed, for example, via the intra-coverage UE. The notification of the integrity assistance data may be included, for example, in signaling of LPP Provide Location Information (see Non Patent Literature 32). The above signaling may be used for the notification from the UE to be positioned to the intra-coverage UE and/or from the intra-coverage UE to the LMF.

Each positioning UE may notify the LMF of the integrity assistance data. The notification may be included in a notification of positioning signal reception results, for example. The notification from the positioning UE to the LMF may be performed, for example, via the intra-coverage UE. The notification of the integrity assistance data may be performed, for example, by using signaling of LPP provide location information or signaling of LPP Provide Assistance Data. The above signalings may be used for the notification from the positioning UE to the intra-coverage UE and/or from the intra-coverage UE to the LMF.

The LMF may request the integrity assistance data from the positioning UE. The request may be made, for example, via the intra-coverage UE. For the request, for example, signaling of LPP request location information may be used. The above signaling may be used for the request from the LMF to the intra-coverage UE and/or from the intra-coverage UE to the positioning UE.

The base station may notify the LMF of the integrity assistance data. The notification may be included in a notification of positioning signal reception results, for example. The notification of the integrity assistance data may be performed by using, for example, signaling of NRPPa POSITIONING INFORMATION RESPONSE (see Non Patent Literature 24), or signaling of NRPPa TRP INFORMATION RESPONSE (see Non Patent Literature 24).

The LMF may request the integrity assistance data from the base station. For the request, for example, signaling of NRPPa POSITIONING INFORMATION REQUEST (see Non Patent Literature 24) may be used, or signaling of NRPPa TRP INFORMATION REQUEST (see Non Patent Literature 24) may be used.

The request and/or notification of the integrity assistance data between the LMF and the positioning UE may be made via the base station. For the request from the LMF to the base station, for example, signaling of NRPPa POSITIONING INFORMATION REQUEST may be used. The signaling may include the request to the base station and the request to the positioning UE. Consequently, for example, it is possible to reduce the amount of signaling between the LMF and the base station. For the request from the base station to the positioning UE, for example, RRC signaling may be used. For the notification from the positioning UE to the base station, for example, RRC signaling may be used. For the notification from the base station to the LMF, for example, signaling of NRPPa POSITIONING INFORMATION RESPONSE may be used. The signaling may include the assistance data from the base station and the assistance data from the positioning UE. Consequently, for example, it is possible to reduce the amount of signaling between the LMF and the base station.

Two or more of the UE to be positioned, the positioning UE, and the base station may notify the LMF of the integrity assistance data. Consequently, for example, the LMF can derive the integrity more accurately.

The integrity assistance data may include information about the location of the base station. The information may be similar to the information disclosed in the first embodiment, for example. For example, the base station may notify the LMF of the information.

The integrity assistance data may include information about time and/or a clock of the base station. The information may be similar to the information disclosed in the first embodiment, for example. For example, the base station may notify the LMF of the information.

The integrity assistance data may include information about time and/or a clock of the positioning UE. The information may be used in the RAT-dependent positioning, for example. The information may be, for example, information about an error in the time of the positioning UE, information about accuracy of the time of the positioning UE, information about jitter of the clock of the positioning UE, or information about a frequency deviation of the clock of the positioning UE, for example, a value of the frequency deviation, and/or information about a frequency deviation drift. For example, the positioning UE may notify the LMF of the information.

The integrity assistance data may include information about time and/or a clock of the UE to be positioned. The information may be used in the RAT-dependent positioning, for example. The information may be, for example, information about an error in the time of the UE to be positioned, information about accuracy of the time of the UE to be positioned, information about jitter of the clock of the UE to be positioned, or information about a frequency deviation of the clock of the UE to be positioned, for example, a value of the frequency deviation, and/or information about a frequency deviation drift. For example, the UE to be positioned may notify the LMF of the information.

The integrity assistance data may include some or all of the information about the above (3) to (13). For example, the UE may notify the LMF of the information.

The integrity assistance data may be included in a measurement report. The base station may transfer the information to the LMF. Consequently, for example, it is possible to reduce the amount of signaling between the base station and the UE.

The LMF may notify the UE to be positioned of information about a positioning integrity derivation result. The notification from the LMF to the UE to be positioned may be performed in positioning in accordance with the MO-LR, for example. The notification may be performed via the AMF and the intra-coverage UE. For the notification from the LMF to the AMF, signaling of Nlmf_Location_Determine Location Response may be used. For the notification from the AMF to the intra-coverage UE, for example, signaling of MO-LR Response may be used. For the notification from the intra-coverage UE to the UE to be positioned, for example, signaling of MO-LR Response may be used, or another signaling may be used. In a direct notification from the AMF to the UE to be positioned, for example, signaling of MO-LR Response may be used.

The information about the integrity derivation result may include some or all of the information about the above (1) to (13).

A positioning capability request and the like from the LMF to the UE to be positioned may be performed similarly to the second embodiment.

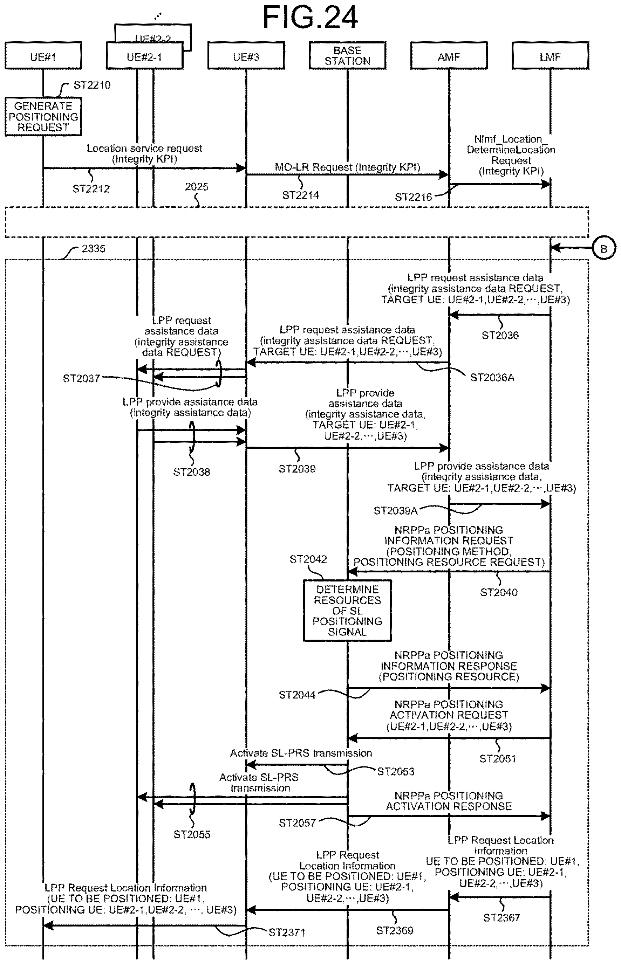

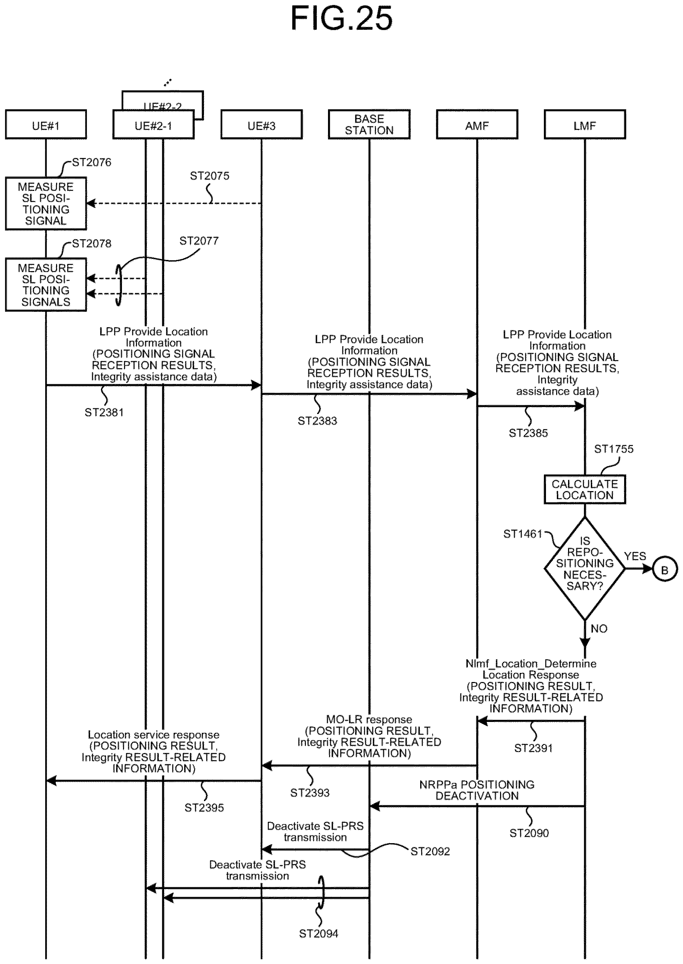

FIGS. 24 and 25 are each a diagram of a sequence illustrating an example of a positioning procedure including a notification of information about the integrity of positioning. FIG. 24 illustrates a first half of the sequence, and FIG. 25 illustrates a second half of the sequence. FIGS. 24 and 25 illustrate an example of UE-assisted positioning in accordance with the MO-LR. In the example illustrated in FIGS. 24 and 25, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIGS. 24 and 25, it is assumed that UE #3 also serves as a positioning UE. The example illustrated in FIGS. 24 and 25 illustrates a case where a method using time difference of arrival of sidelink positioning signals from positioning UEs to a UE to be measured is applied as a method for positioning a UE. In addition, in the example illustrated in FIGS. 24 and 25, the UE #2 group and UE #3 are employed as first communication terminals, and the UE #2 group and UE #3 operate as positioning signal transmission devices. UE #1 is employed as a second communication terminal, and UE #1 operates as a positioning signal reception device. A host device including the LMF operates as a location calculation device. In FIGS. 24 and 25, processes similar to those in FIGS. 14, 17, 20, 21, and 23 are denoted by the same numbers as those therein, and a common description will be omitted.

Steps ST2210 to ST2216 illustrated in FIG. 24 are similar to those in FIG. 23.

Procedure 2025 illustrated in FIG. 24 is similar to that in FIG. 20.

In procedure 2335 illustrated in FIG. 24, a positioning configuration by the LMF and positioning signal transmission from the UE #2 group and UE #3 to UE #1 are performed. Steps ST2036 to ST2057 are similar to those in FIG. 20.

In steps ST2367, ST2369, and ST2371 illustrated in FIG. 24, the LMF requests positioning-related information from UE #1. In the example illustrated in FIG. 24, the request is made via the AMF and UE #3. Step ST2367 indicates the request from the LMF to the AMF, step ST2369 indicates the request from the AMF to UE #3, and step ST2371 indicates the request from UE #3 to UE #1. For example, signaling of LPP Request Location Information (see Non Patent Literature 32) may be used for the request. The request may include information about the positioning method, information about resources of a positioning signal to be transmitted by the base station to UE #1, or information about the UE to be positioned and the positioning UEs.

Steps ST2075 to ST2078 illustrated in FIG. 25 are similar to those in FIG. 21.

In steps ST2381, ST2383, and ST2385 illustrated in FIG. 25, UE #1 notifies the LMF of positioning signal reception results. In the example illustrated in FIG. 25, the notification is performed via UE #3 and the AMF. Step ST2381 indicates the notification from UE #1 to UE #3, step ST2383 indicates the notification from UE #3 to the AMF, and step ST2385 indicates the notification from the AMF to the LMF. The notification may include a positioning result, information about a derived integrity result, or integrity assistance information.

Step ST1755 illustrated in FIG. 25 is similar to that in FIG. 17. Step ST1461 is similar to that in FIG. 14.

In steps ST2391, ST2393, and ST2395 illustrated in FIG. 25, the LMF notifies UE #1 of a positioning result. In the example illustrated in FIG. 25, the notification is performed via the AMF and UE #3. Step ST2391 indicates the notification from the LMF to the AMF, step ST2393 indicates the notification from the AMF to UE #3, and step ST2395 indicates the notification from UE #3 to UE #1. The notification may include the information about the integrity result.

Steps ST2090 to ST2094 illustrated in FIG. 25 are similar to those in FIG. 21.

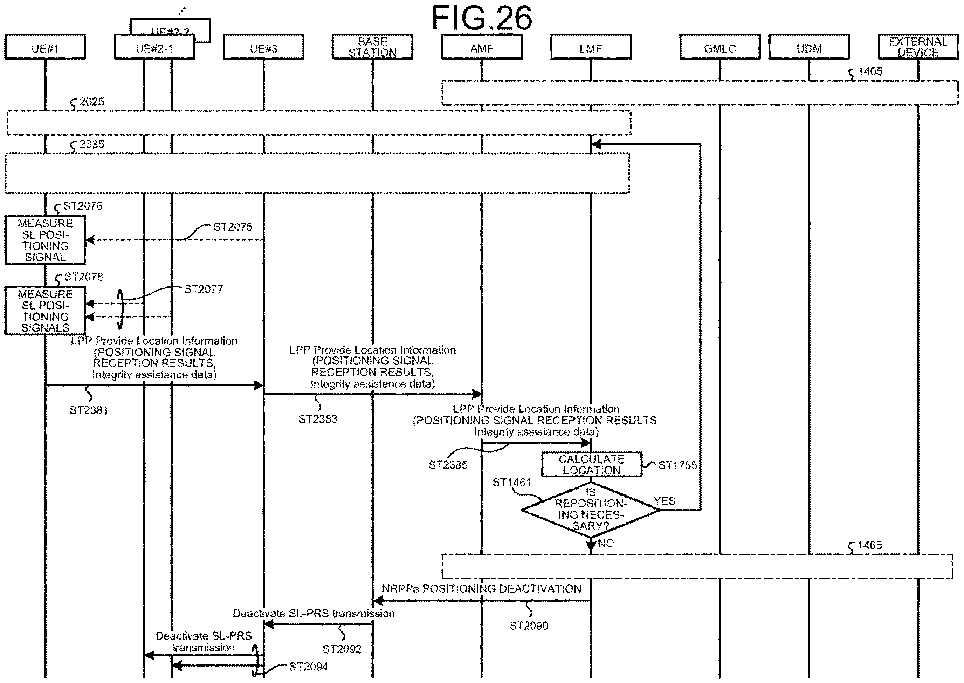

FIG. 26 is a sequence diagram illustrating another example of the positioning procedure including the notification of the information about the integrity of positioning. FIG. 26 illustrates an example of UE-assisted positioning in accordance with the MT-LR. In the example illustrated in FIG. 26, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIG. 26, it is assumed that UE #3 also serves as a positioning UE. The example illustrated in FIG. 26 illustrates a case where a method using time difference of arrival of sidelink positioning signals from positioning UEs to a UE to be measured is applied as a method for positioning a UE. In addition, in the example illustrated in FIG. 26, similarly to the example illustrated in FIGS. 24 and 25, the UE #2 group and UE #3 are employed as first communication terminals, and the UE #2 group and UE #3 operate as positioning signal transmission devices. UE #1 is employed as a second communication terminal, and UE #1 operates as a positioning signal reception device. A host device including the LMF operates as a location calculation device. In FIG. 26, processes similar to those in FIGS. 14, 17, 20, 21, 24, and 25 are denoted by the same numbers as those therein, and a common description will be omitted.

Procedure 1405 illustrated in FIG. 26 is similar to that in FIG. 14. Procedure 2025 is similar to that in FIG. 20. Procedure 2335 is similar to that in FIG. 24.

Steps ST2075 to ST2078 illustrated in FIG. 26 are similar to those in FIG. 21. Steps ST2381 to ST2385 are similar to those in FIG. 25. Step ST1755 is similar to that in FIG. 17. Step ST1461 is similar to that in FIG. 14.

Procedure 1465 illustrated in FIG. 26 is similar to that in FIG. 14.

Steps ST2090 to ST2094 illustrated in FIG. 26 are similar to those in FIG. 21.

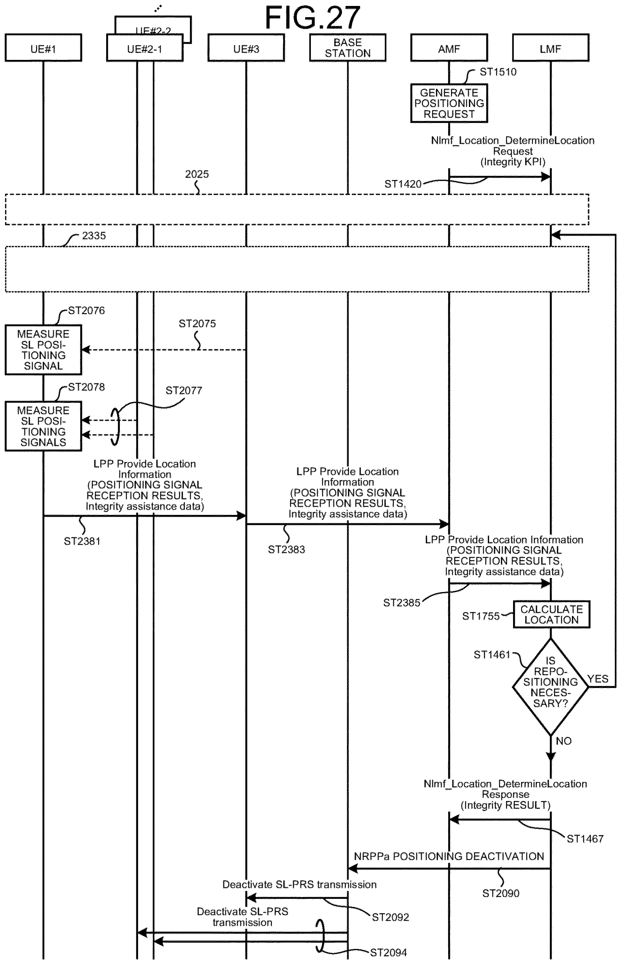

FIG. 27 is a sequence diagram illustrating another example of the positioning procedure including the notification of the information about the integrity of positioning. In the example illustrated in FIG. 27, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIG. 27, it is assumed that UE #3 also serves as a positioning UE. FIG. 27 illustrates an example of UE-assisted positioning in accordance with the NI-LR. The example illustrated in FIG. 27 illustrates a case where a method using time difference of arrival of sidelink positioning signals from positioning UEs to a UE to be measured is applied as a method for positioning a UE. In addition, in the example illustrated in FIG. 27, similarly to the example illustrated in FIGS. 24 and 25, the UE #2 group and UE #3 are employed as first communication terminals, and the UE #2 group and UE #3 operate as positioning signal transmission devices. UE #1 is employed as a second communication terminal, and UE #1 operates as a positioning signal reception device. A host device including the LMF operates as a location calculation device. In FIG. 27, processes similar to those in FIGS. 14, 15, 17, 20, 21, 24, and 25 are denoted by the same numbers as those therein, and a common description will be omitted.

Step ST1510 illustrated in FIG. 27 is similar to that in FIG. 15. Step ST1420 is similar to that in FIG. 14.

Procedure 2025 illustrated in FIG. 27 is similar to that in FIG. 20. Procedure 2335 is similar to that in FIG. 24.

Steps ST2075 to ST2078 illustrated in FIG. 27 are similar to those in FIG. 21. Steps ST2381 to ST2385 are similar to those in FIG. 25. Step ST1755 is similar to that in FIG. 17. Step ST1461 is similar to that in FIG. 14.

Step ST1467 illustrated in FIG. 27 is similar to that in FIG. 14.

Steps ST2090 to ST2094 illustrated in FIG. 27 are similar to those in FIG. 21.

Although the case where the sidelink positioning signal time difference of arrival is used as the positioning method in FIGS. 24, 25, 26, and 27 has been described, sidelink positioning signals' angle of departure may be used, multi-RTT may be used, or another positioning method may be used. In the positioning method using the sidelink positioning signal time difference of arrival, time difference of arrival of signals transmitted from positioning UEs to a UE to be positioned may be used, or time difference of arrival of signals transmitted from the UE to be positioned to the positioning UEs may be used. Multi-RTT using a sidelink may be, for example, a positioning method using RTTs to and from pluralities of positioning UEs and/or base stations. For example, also in a case where another positioning method is used, it is possible to ensure integrity.

In the second embodiment and/or the first modification, results of positioning signal transmission/reception between the UE to be positioned and the base station may be used in combination. The method disclosed in the second embodiment and/or the first modification may be used in NG-RAN node-assisted positioning. The NG-RAN node-assisted positioning may be, for example, MO-LR positioning, NI-LR positioning, or MT-LR positioning. For the positioning, for example, a plurality of RTTs may be used, NR E-CID may be used, uplink time difference of arrival may be used, uplink angle of arrival may be used, or another positioning method may be used.
The base station may notify the LMF of the integrity assistance data. The notification may be included in a notification of positioning signal reception results, for example. Consequently, for example, it is possible to ensure the integrity of positioning also in the NG-RAN node-assisted positioning.

According to the first modification, it is possible to ensure the integrity of positioning also in UE-assisted positioning and/or NG-RAN node-assisted positioning using a sidelink.

### Second Modification of Second Embodiment.

The derivation of the integrity of the sidelink positioning may be performed, for example, in sidelink mode 2 (see Non Patent Literature 16). For example, in a case where both the UE to be positioned and each positioning UE present outside the coverage, the integrity may be derived. The positioning may be UE-based positioning or UE-assisted positioning.

The positioning may be performed as triggered by a location request to a UE having a location server function (hereinafter, sometimes referred to as a server UE) .

A source of the location request may be, for example, the UE to be positioned. The UE to be positioned may make the location request to the server UE. The request may include information about the integrity KPI. The information about the integrity KPI may be, for example, information similar to that in the first embodiment.

The UE to be positioned may notify the server UE of the integrity assistance data. The notification may be included in a notification of positioning signal reception results, for example. The notification may be included in, for example, signaling of LPP Provide Location Information.

The positioning UE may notify the server UE of the integrity assistance data. For the notification, for example, signaling of LPP Provide Assistance Data may be used. The server UE may request the integrity assistance data from the positioning UE. For the request, for example, signaling of LPP Request Assistance Data may be used. The request may include, for example, information about the assistance data (e.g., the type of data).

The notification of the integrity assistance data may be performed by the UE to be positioned, by the positioning UE, or by both thereof. Consequently, for example, it is possible to ensure the integrity of positioning.

The information included in the integrity assistance data may be similar to that in the second embodiment.

The server UE may notify the UE to be positioned of information about an integrity derivation result. The notification may be included in information about a positioning result, for example. The information about the integrity derivation result may be similar to that in the second embodiment.

The server UE may determine the positioning UE. The server UE may determine candidates for the positioning UE. Results of measurements by the UE to be positioned may be used for the determination of the positioning UE by the server UE. The UE to be positioned may notify the server UE of measurement results of signals of neighbor UEs. The notification may be included in, for example, signaling of Location service request, or another signaling may be used. The server UE may request the UE to be positioned to measure the signals of the neighbor UEs. The UE to be positioned may perform the measurements as triggered by the request from the server UE. The server UE may determine the positioning UE by using the notification. Candidates for the positioning UE may be determined.

A signal to be measured may be, for example, a synchronization signal block (SS block), a CSI-RS, a discovery signal, or another signal. The measurement results may be, for example, reference signal received power (RSRP), reference signal received quality (RSRQ), or signal to interference noise ratio (SINR). The notification from the UE to be positioned may include information about the neighbor UEs, for example, identifiers of the neighbor UEs. The request from the server UE may include information about the type of the measurement results, for example, information about the type of RSRP, RSRQ, and/or SINR, information about the number of measurement results to be requested, for example, information about a maximum value and/or a minimum value of the number thereof, or information about thresholds of the measurement results. For example, the UE to be positioned may notify only measurement results greater than, or equal to or greater than the thresholds. The information about the number of measurement results and/or the thresholds may be given in advance in a standard.

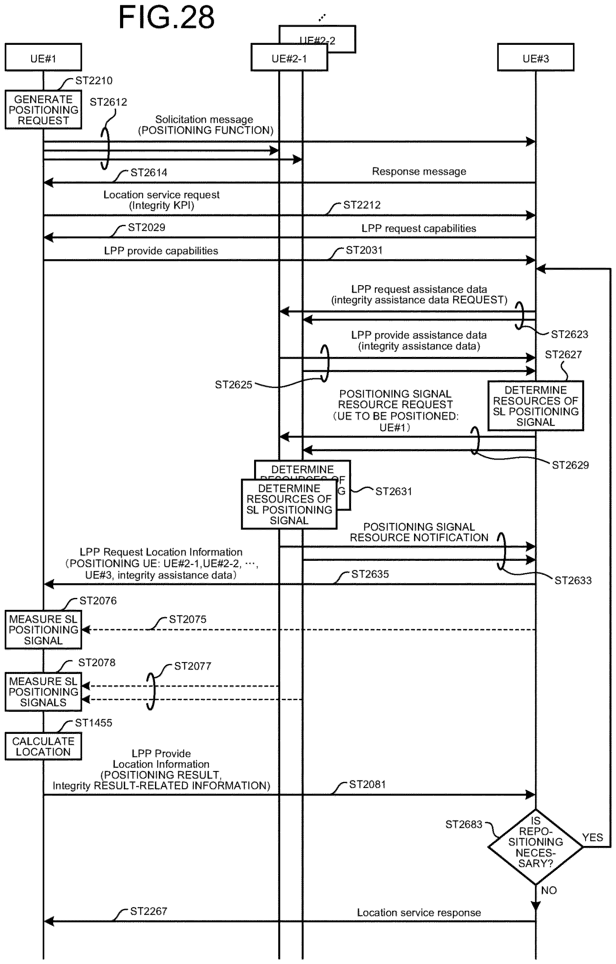

FIG. 28 is a sequence diagram illustrating an example of a positioning procedure including a notification of information about the integrity of positioning. In the example illustrated in FIG. 28, it is assumed that UE #1 corresponds to a UE to be positioned, the UE #2 group corresponds to positioning UEs, and UE #3 corresponds to a server UE. FIG. 28 illustrates an example of UE-based positioning in accordance with the MO-LR for a UE present outside the coverage, that is, an example in which calculation of location information is performed by UE #1 itself. In addition, in the example illustrated in FIG. 28, the UE #2 group and UE #3 are employed as first communication terminals, and the UE #2 group and UE #3 operate as positioning signal transmission devices. UE #1 is employed as a second communication terminal, and UE #1 operates as a positioning signal reception device and a location calculation device. In FIG. 28, processes similar to those in FIGS. 14, 20, 21, and 23 are denoted by the same numbers as those therein, and a common description will be omitted.

Step ST2210 illustrated in FIG. 28 is similar to that in FIG. 23.

In step ST2612 illustrated in FIG. 28, UE #1 searches for a server UE among other UEs. The search may be performed by using broadcast, for example. The search may include information indicating that it is a search for a UE having a positioning function. In step ST2614, UE #3 notifies UE #1 of a response to the search.

Step ST2212 illustrated in FIG. 28 is similar to that in FIG. 23. UE #3 may determine the positioning UEs as triggered by step ST2212.

Steps ST2029 and ST2031 illustrated in FIG. 28 are similar to those in FIG. 20. Although the example in which UE #3 determines the positioning UEs as triggered by step ST2212 has been described above, UE #3 may determine the positioning UEs as triggered by step ST2031.

UE #3 determines the UE #2 group. Candidates for the UE #2 group may be determined. Results of measurements by UE #1 may be used for the determination of the positioning UEs by UE #3. UE #1 may notify UE #3 of measurement results of signals of neighbor UEs. The notification may be included in, for example, signaling in step ST2212, or another signaling may be used. The server UE may request the UE to be positioned to measure the signals of the neighbor UEs. The request may be made as triggered by ST2212, for example. The UE to be positioned may perform the measurements as triggered by the request from the server UE. In the example illustrated in FIG. 28, UE #3 determines to use the UE #2 group as the positioning UEs.

In step ST2623 illustrated in FIG. 28, UE #3 requests the integrity assistance data from the UE #2 group. The request may be made by using, for example, signaling of LPP request assistance data. The request may include information about the integrity assistance data to be requested, for example, information about the type thereof. In step ST2625, the UE #2 group notifies UE #3 of the integrity assistance data. For example, signaling of LPP provide assistance data may be used for the notification. UE #3 may change the positioning UEs by using the notification. UE #3 may make the request again to the positioning UEs after the change. As another example, UE #3 may determine the positioning UEs from the candidates for the positioning UEs by using the notification.

In step ST2627 illustrated in FIG. 28, UE #3 determines resources of a positioning signal to be transmitted from UE #3 to UE #1. In step ST2629, UE #3 requests the UE #2 group to determine resources of positioning signals to be transmitted to UE #1. In step ST2631, the UE #2 group determines resources of positioning signals to be transmitted from the UE #2 group to UE #1. In step ST2633, the UE #2 group notifies UE #3 of information about the resources.

In step ST2635 illustrated in FIG. 28, UE #3 requests positioning-related information from UE #1. For example, signaling of LPP Request Location Information (see Non Patent Literature 32) may be used for the request. The request may include information about a positioning method, information about resources of positioning signals to be transmitted from UE #3 and the UE #2 group to UE #1, information about positioning signal sources/destinations, or the integrity assistance data.

Steps ST2075 to ST2078 illustrated in FIG. 28 are similar to those in FIG. 21. Step ST1455 is similar to that in FIG. 14. Step ST2081 is similar to that in FIG. 21.

In step ST2683 illustrated in FIG. 28, UE #3 determines the necessity of repositioning. The information about the integrity result may be used for the determination. In the case illustrated in FIG. 28, if UE #3 determines that the repositioning is necessary, UE #3 resumes the process from step ST2623. In the repositioning, the positioning UEs may be changed.

In the case illustrated in FIG. 28, if UE #3 determines that the repositioning is not necessary, the process of step ST2267 is performed. Step ST2267 is similar to that in FIG. 23.

Although FIG. 28 illustrates the case where step ST2627 is performed before step ST2629, step ST2627 may be performed after step ST2633. UE #3 may determine resources of a positioning signal to be transmitted from UE #3 to UE #1 by using the notification of the resources from the UE #2 group. Consequently, for example, collision of positioning signal resources between UE #3 and the UE #2 group can be avoided.

Although the example has been described in which UE #1 searches for the server UE in step ST2612 illustrated in FIG. 28, the server UE may perform a notification or broadcast, to another UE, of information indicating that the server UE is a server UE. For example, announcement message or different signaling may be used for the notification or the broadcast. UE #1 may know that UE #3 is a server UE as triggered by the notification or the broadcast. Consequently, for example, the necessity of the signaling of step ST2614 is eliminated, and as a result, it is possible to reduce the amount of signaling in the communication system.

The server UE may originate a positioning request. In that case, the processes of steps ST2210, ST2612, ST2614, ST2212, and ST2267 in the example in FIG. 28 may not be performed.

A UE different from both the UE to be positioned and the server UE (hereinafter, sometimes referred to as a third party UE) may originate the positioning request. The third party UE may make the positioning request to the server UE. For example, the processes of step ST2210 in the example in FIG. 28 may be performed by the third party UE, or the processes of steps ST2612, ST2614, ST2212, and ST2267 may be performed between the third party UE and the server UE. Also in a case where a UE as a source of a location request is the third party UE, an effect similar to that described above can be obtained.

The derivation of the integrity of sidelink positioning in sidelink mode 2 may be performed in UE-assisted positioning. For example, the server UE may calculate the location information.

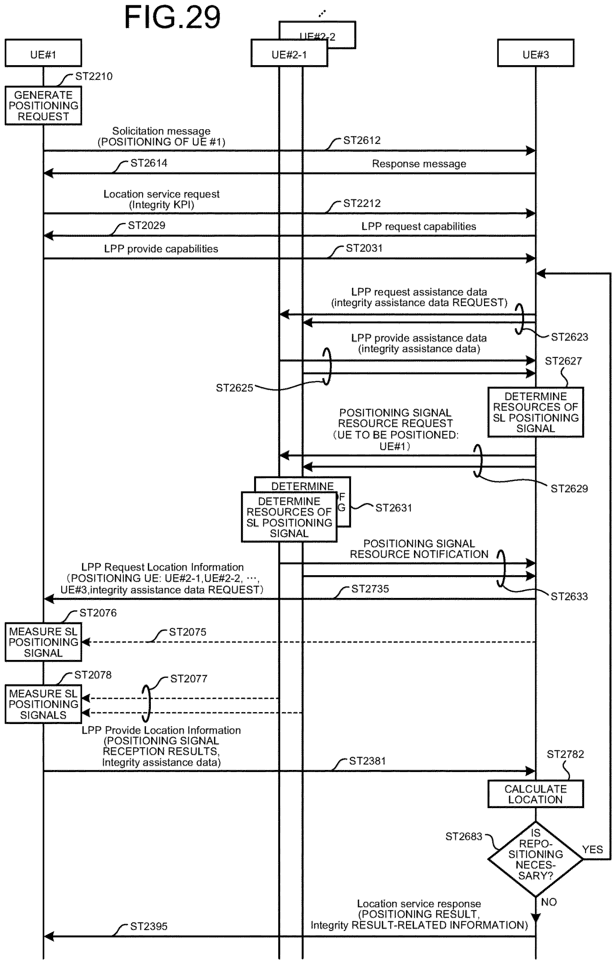

FIG. 29 is a sequence diagram illustrating another example of the positioning procedure including the notification of the information about the integrity of positioning. In the example illustrated in FIG. 29, it is assumed that UE #1 corresponds to a UE to be positioned, the UE #2 group corresponds to positioning UEs, and UE #3 corresponds to a server UE. FIG. 29 illustrates an example of UE-assisted positioning in accordance with the MO-LR for a UE present outside the coverage, that is, an example in which calculation of location information is performed by UE #3. In addition, in the example illustrated in FIG. 29, the UE #2 group and UE #3 are employed as first communication terminals, and the UE #2 group and UE #3 operate as positioning signal transmission devices. UE #3 operates also as a location calculation device. UE #1 is employed as a second communication terminal, and UE #1 operates as a positioning signal reception device. In FIG. 29, processes similar to those in FIGS. 20, 21, 23, 24, 25, and 28 are denoted by the same numbers as those therein, and a common description will be omitted.

Step ST2210 illustrated in FIG. 29 is similar to that in FIG. 23. Steps ST2612 and ST2614 are similar to those in FIG. 28. Step ST2212 is similar to that in FIG. 23. Steps ST2029 and ST2031 are similar to those in FIG. 20.

Steps ST2623 to ST2633 illustrated in FIG. 29 are similar to those in FIG. 28.

In step ST2735 illustrated in FIG. 29, UE #3 requests positioning-related information from UE #1. For example, signaling of LPP Request Location Information (see Non Patent Literature 32) may be used for the request. The request may include information about a positioning method, information about resources of positioning signals to be transmitted from UE #3 and the UE #2 group to UE #1, information about positioning signal sources/destinations, or a request for the integrity assistance data.

Steps ST2075 to ST2078 illustrated in FIG. 29 are similar to those in FIG. 21. Step ST2381 is similar to that in FIG. 25.

In step ST2782 illustrated in FIG. 29, UE #3 calculates the location of UE #1. UE #3 may perform the calculation by using positioning signal reception results in step ST2381. UE #3 may derive the integrity of a calculated positioning result. UE #3 may use the integrity assistance data to derive the integrity.

Step ST2683 illustrated in FIG. 29 is similar to that in FIG. 28. Step ST2395 is similar to that in FIG. 25.

Also in FIG. 29, similarly to FIG. 28, step ST2627 may be performed after step ST2633. UE #3 may determine resources of a positioning signal to be transmitted from UE #3 to UE #1 by using the notification of the resources from the UE #2 group. Consequently, for example, collision of positioning signal resources between UE #3 and the UE #2 group can be avoided.

Also in FIG. 29, similarly to FIG. 28, the server UE may perform a notification or broadcast, to another UE, of information indicating that the server UE is a server UE. UE #1 may know that UE #3 is a server UE as triggered by the notification or the broadcast. Consequently, for example, the necessity of the signaling of step ST2614 is eliminated, and as a result, it is possible to reduce the amount of signaling in the communication system.

The server UE may originate a positioning request. In that case, the processes of steps ST2210, ST2612, ST2614, ST2212, and ST2395 in the example in FIG. 29 may not be performed.

The third party UE may originate a positioning request. The third party UE may make the positioning request to the server UE. For example, the processes of step ST2210 in the example in FIG. 29 may be performed by the third party UE, or the processes of steps ST2612, ST2614, ST2212, and ST2395 may be performed between the third party UE and the server UE. Also in a case where a UE as a source of a location request is the third party UE, an effect similar to that described above can be obtained.

A source of the positioning request, a target of the positioning, and the server UE may be the same UE. For example, in the example illustrated in FIG. 29, UE #3 may perform step ST2210. The processes of steps ST2612 to ST2031, ST2075, and ST2076 may not be performed. The process of step ST2077 from the UE #2 group may be performed on UE #3. The process of step ST2078 may be performed by UE #3. The processes of steps ST2381 and ST2395 may not be performed.

A location requesting UE may determine the presence or absence of a request to the server UE. The determination may be made, for example, in a case where the location requesting UE has a location server function. For example, in a case where the location requesting UE transmits the location request to the server UE, the location server function of the server UE may be used. In a case where the location requesting UE does not transmit the request, the location server function of the location requesting UE may be used. Consequently, for example, it is possible to improve the flexibility of the communication system.

As another example, the location requesting UE may perform positioning of the location requesting UE. The operation may be performed, for example, in a case where UEs present in the coverage, which includes the location requesting UE, do not have the location server function. The location requesting UE may determine the positioning UEs. The location requesting UE may request the positioning UEs to transmit positioning signals. The location requesting UE may receive the positioning signals from the positioning UEs. A location transmitting UE may derive the location of the location transmitting UE by using the reception results, or may derive relative distances from the positioning UEs.

According to the second modification, it is possible to ensure the integrity of positioning in positioning using a sidelink also for UEs present outside the coverage.

### Third Embodiment.

In positioning using a sidelink, a plurality of UEs may be used as positioning UEs. In the positioning using a sidelink, results of transmission/reception of positioning signals to and from a base station may be used.

However, an increase in the number of UEs to be positioned results in an increase in transmission/reception of positioning signals to and from the positioning UEs and/or the base station, and as a result, efficiency of communication resources decreases, which is a problem.

The third embodiment discloses a method for solving the above problem.

In order to solve the above problem, in the communication system according to the present embodiment, one positioning signal can be received by a plurality of UEs.

A sidelink positioning signal may be received by a plurality of UEs. The positioning signal may be groupcast or may remain unicast.

Time and/or frequency resources of the sidelink positioning signal may be determined by the base station. The base station may notify the UE to be positioned of information about resources of the positioning signal. The base station may notify each positioning UE of information about the sidelink positioning signal from the UE to be positioned. The number of positioning UEs as destinations of the notification from the base station may be one, or two or more. The notification from the base station to the positioning UEs may be, for example, groupcast. Consequently, for example, it is possible to reduce the amount of signaling related to the notification. The notification from the base station to the positioning UEs may be unicast. Consequently, for example, retransmission control can be performed, and as a result, reliability about the notification of the signaling can be improved.

An LMF may determine the positioning UEs or may determine candidates for the positioning UEs. For example, a method similar to the method disclosed in the second embodiment may be used for the determination. For example, a method obtained by replacing the server UE in the method disclosed in the second embodiment with the LMF may be used. A notification from the UE to be positioned to the LMF and/or a request from the LMF to the positioning UEs may include the information disclosed in the second embodiment.

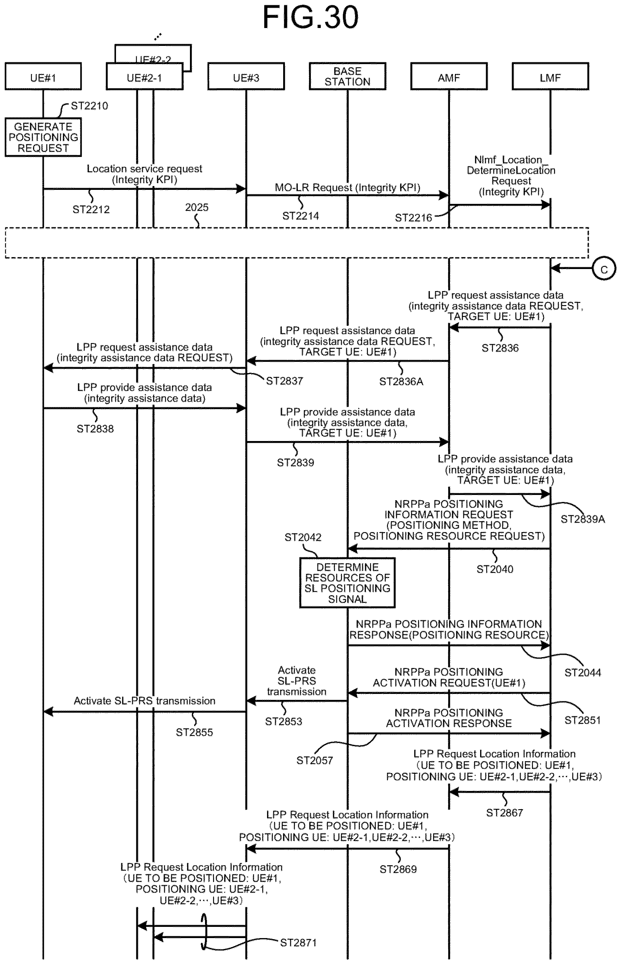

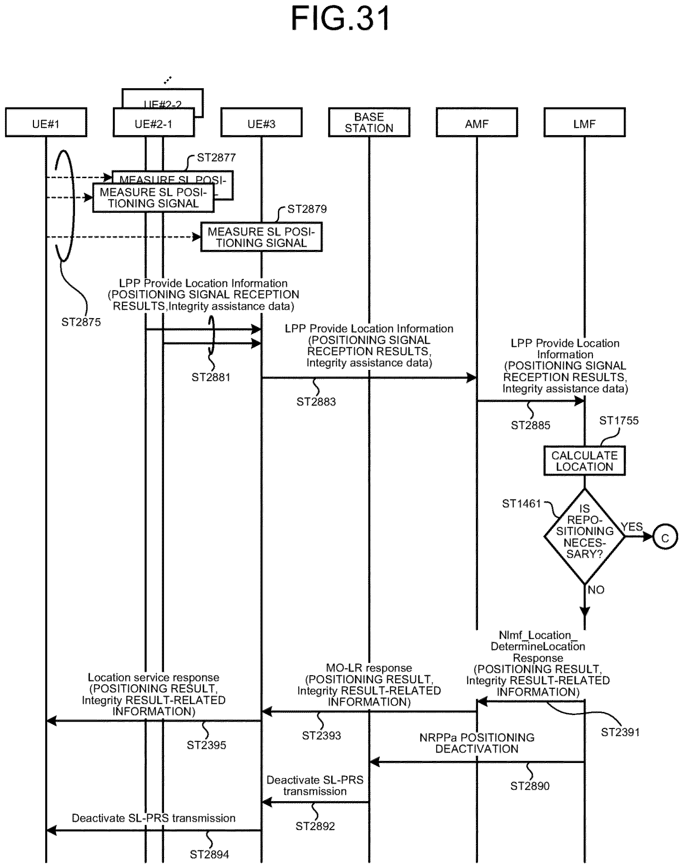

FIGS. 30 and 31 are each a diagram of a sequence illustrating an example of a positioning procedure in which positioning signal transmission from a UE to be positioned to a plurality of positioning UEs is performed by using one positioning signal. FIG. 30 illustrates a first half of the sequence, and FIG. 31 illustrates a second half of the sequence. In the example illustrated in FIGS. 30 and 31, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIGS. 30 and 31, it is assumed that UE #3 also serves as a positioning UE. In FIGS. 30 and 31, processes similar to those in FIGS. 14, 17, 20, 21, 23, 24, and 25 are denoted by the same numbers as those therein, and a common description will be omitted.

Steps ST2210 to ST2216 in FIG. 30 are similar to those in FIG. 23.

Procedure 2025 illustrated in FIG. 30 is similar to that in FIG. 20.

In steps ST2836, ST2836A, ST2837, ST2838, ST2839, and ST2839A illustrated in FIG. 30, processes similar to those of steps ST2036, ST2036A, ST2037, ST2038, ST2039, and ST2039A in FIG. 20 are performed on UE #1.

Steps ST2040 to ST2044 in FIG. 30 are similar to those in FIG. 20. In step ST2042 in FIG. 30, resources of a positioning signal to be transmitted from UE #1 to the UE #2 group and UE #3 are determined.

In step ST2851 illustrated in FIG. 30, the LMF makes a request to the base station for start of positioning signal transmission from the UE #2 group and UE #3. For the request, for example, signaling of NRPPa POSITIONING ACTIVATION REQUEST (see Non Patent Literature 34) may be used. The request may include information about UEs that start positioning signal transmission. In steps ST2853 and ST2855, a request from the base station to UE #1 for start of positioning signal transmission is made. The request is made via UE #3. Step ST2057 is similar to that in FIG. 20.

In steps ST2867, ST2869, and ST2871 illustrated in FIG. 30, processes similar to those of steps ST2367, ST2369, and ST2371 in FIG. 24 are performed on UE #1.

In step ST2875 illustrated in FIG. 31, positioning signal transmission is performed from UE #1 to the UE #2 group and UE #3. Positioning signals to be transmitted from UE #1 to the UE #2 group and UE #3 may use the same resources. In step ST2877, the UE #2 group receives the positioning signals. In step ST2879, UE #3 receives the positioning signal.

In steps ST2881, ST2883, and ST2885 illustrated in FIG. 31, processes similar to those of steps ST2381, ST2383, and ST2385 in FIG. 25 are performed from the UE #2 group. UE #3 may include, in step ST2883, a positioning signal reception result in UE #3 and perform a notification thereof.

Step ST1755 illustrated in FIG. 31 is similar to that in FIG. 17. Step ST1461 is similar to that in FIG. 14. Steps ST2391 to ST2395 are similar to those in FIG. 25.

In step ST2890 illustrated in FIG. 31, the LMF gives the base station an instruction on stop of the positioning signal transmission from UE #1. For the instruction, for example, signaling of NRPPa POSITIONING DEACTIVATION (see Non Patent Literature 34) may be used. The instruction may include information about the UE that stops the positioning signal transmission. In steps ST2892 and ST2894, an instruction to stop positioning signal transmission is given from the base station to UE #1. The instruction is given via UE #3. UE #1 stops the positioning signal transmission as triggered by the instruction.

Another solution will be disclosed. Sidelink positioning signals of the same resources may be used for a plurality of UEs to be positioned. The base station may notify the positioning UEs of information about resources of the sidelink positioning signals. The notification may include information about one or a plurality of UEs to be positioned. The positioning UEs may transmit the sidelink positioning signals by using the notification. The one or the plurality of UEs to be positioned may receive the same sidelink positioning signal.

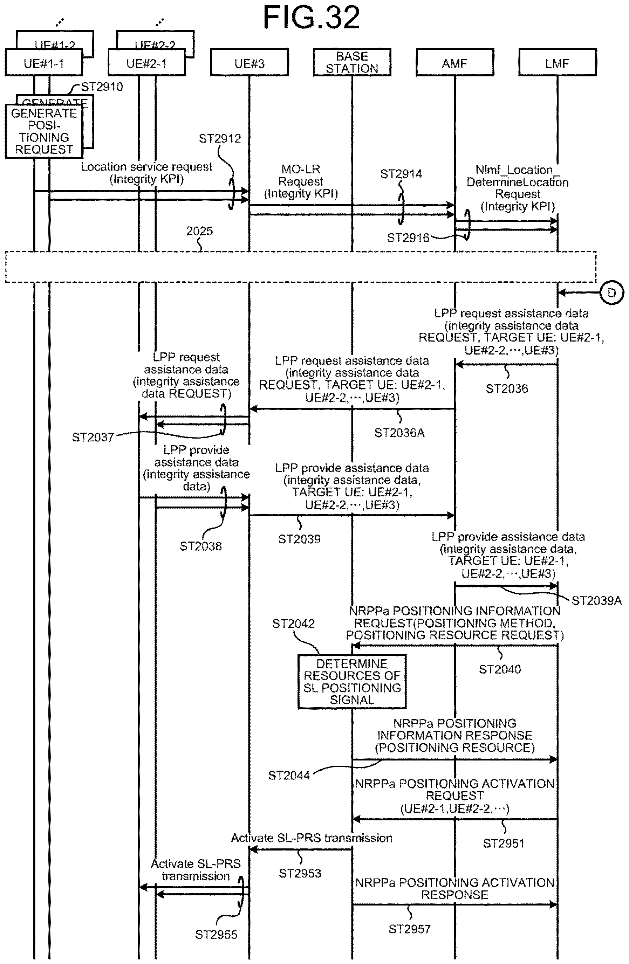

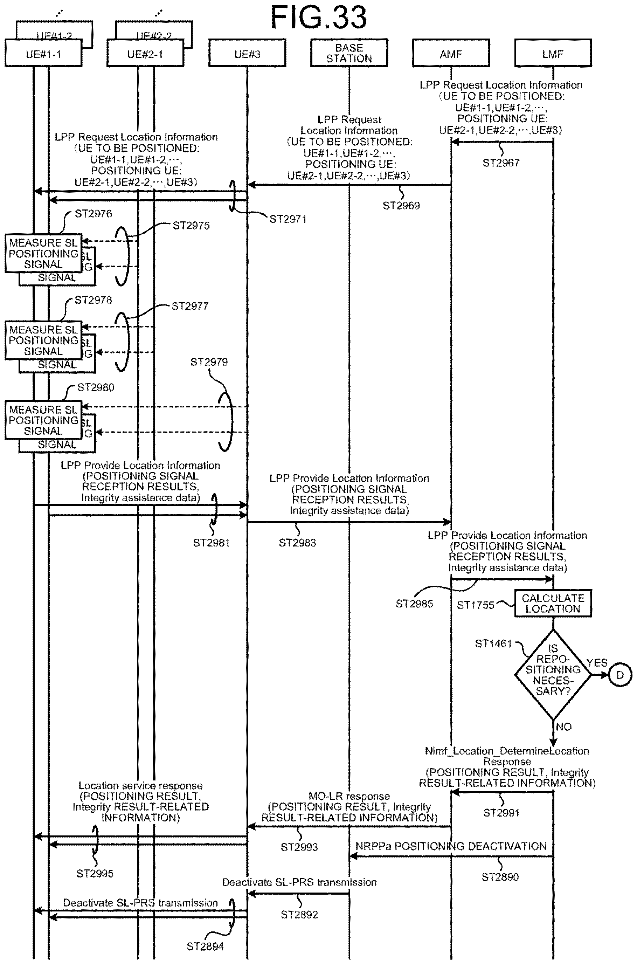

FIGS. 32 and 33 are each a diagram of a sequence illustrating an example of a positioning procedure in which positioning signal transmission from positioning UEs to a plurality of UEs to be positioned is performed by using one positioning signal. FIG. 32 illustrates a first half of the sequence, and FIG. 33 illustrates a second half of the sequence. In the example illustrated in FIGS. 32 and 33, it is assumed that UE #1-1, UE #1-2, ... (hereinafter, UE #1-1, UE #1-2, ... are sometimes referred to as a UE #1 group) correspond to UEs to be positioned, the UE #2 group corresponds to positioning UEs, and UE #3 corresponds to an intra-coverage UE. UE #3 may operate as a positioning UE. In the example illustrated in FIGS. 32 and 33, it is assumed that UE #3 also serves as a positioning UE. In FIGS. 32 and 33, processes similar to those in FIGS. 14, 17, 20, 21, 23, 24, 25, 30, and 31 are denoted by the same numbers as those therein, and a common description will be omitted.

In steps ST2910, ST2912, ST2914, and ST2916 illustrated in FIG. 32, processes similar to those of steps ST2210, ST2212, ST2214, and ST2216 in FIG. 23 are performed by the UE #1 group.

Procedure 2025 illustrated in FIG. 32 is similar to that in FIG. 20.

Steps ST2036 to ST2044 illustrated in FIG. 32 are similar to those in FIG. 20.

In steps ST2951, ST2953, ST2955, and ST2957 illustrated in FIG. 32, processes similar to those of steps ST2851, ST2853, ST2855, and ST2057 in FIG. 30 are performed on the UE #2 group.

In steps ST2967, ST2969, and ST2971 illustrated in FIG. 33, processes similar to those of steps ST2867, ST2869, and ST2871 in FIG. 30 are performed on the UE #1 group.

In step ST2975 illustrated in FIG. 33, positioning signal transmission is performed from UE #2-1 to the UE #1 group. Positioning signals to be transmitted from UE #2-1 to the UE #1 group may use the same resources. In step ST2976, the UE #1 group receives the positioning signals.

In step ST2977 illustrated in FIG. 33, a process similar to that of step ST2975 is performed by UE #2-2. In step ST2978, the UE #1 group receives the positioning signals.

In step ST2979 illustrated in FIG. 33, a process similar to that of step ST2975 is performed by UE #3. In step ST2980, the UE #1 group receives the positioning signals.

In steps ST2981, ST2983, and ST2985 illustrated in FIG. 33, processes similar to those of steps ST2081, ST2082, and ST2083 in FIG. 21 are performed by the UE #1 group. However, data to be transmitted from each UE in the UE #1 group is positioning signal reception results and the integrity assistance data.

Step ST1755 illustrated in FIG. 33 is similar to that in FIG. 17. Step ST1461 is similar to that in FIG. 14.

Steps ST2991, ST2993, and ST2995 illustrated in FIG. 33 are similar to steps ST2391, ST2393, and ST2395 illustrated in FIG. 25. However, the process of step ST2995 is performed on the UE #1 group.

Steps ST2890 to ST2894 illustrated in FIG. 33 are similar to those in FIG. 31. However, the process of step ST2894 is performed on the UE #1 group.

Another solution will be disclosed. The base station may be able to receive a sidelink positioning signal. One or a plurality of positioning UEs may be able to receive an uplink SRS directed to the base station.

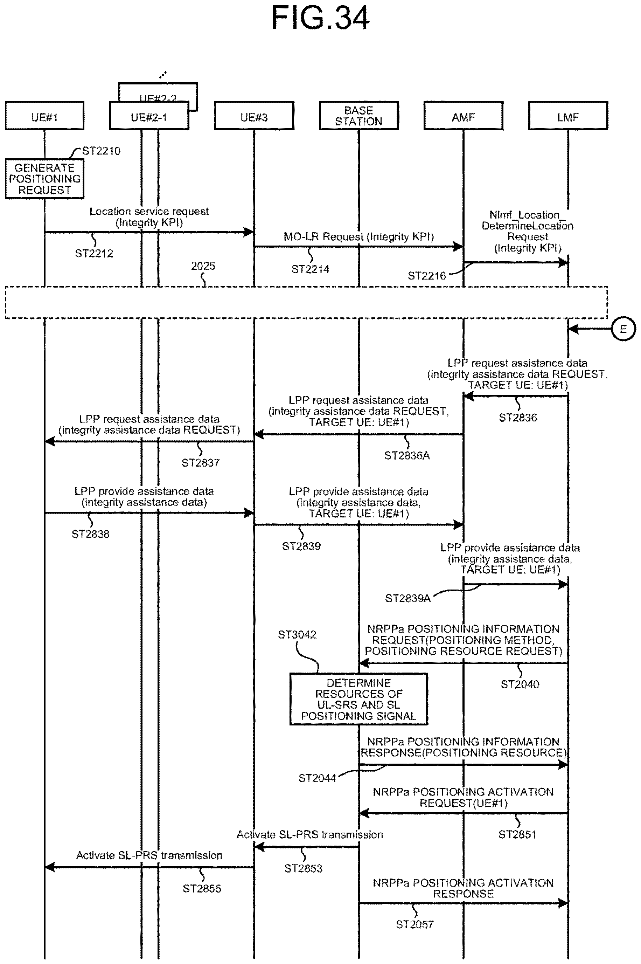

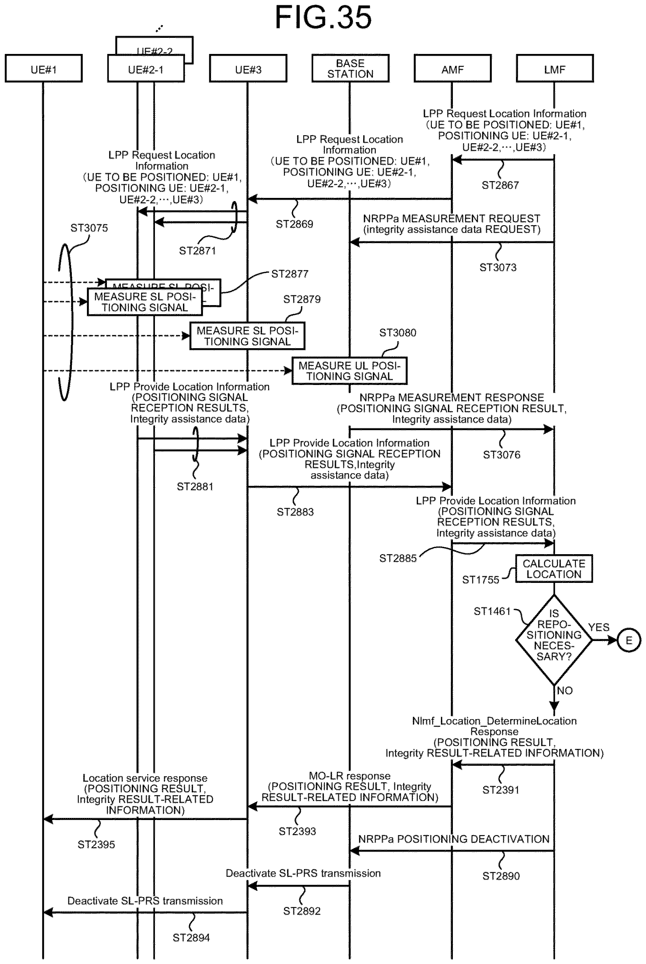

FIGS. 34 and 35 are each a diagram of a sequence illustrating an example of a positioning procedure in which positioning signal transmission from a UE to be positioned to positioning UEs and a base station is performed by using one positioning signal. FIG. 34 illustrates a first half of the sequence, and FIG. 35 illustrates a second half of the sequence. In the example illustrated in FIGS. 34 and 35, it is assumed that UE #1 corresponds to a UE to be positioned, the UE #2 group corresponds to positioning UEs, and UE #3 corresponds to an intra-coverage UE. UE #3 may operate as a positioning UE. In the example illustrated in FIGS. 34 and 35, it is assumed that UE #3 also serves as a positioning UE. In FIGS. 34 and 35, processes similar to those in FIGS. 14, 17, 20, 21, 23, 24, 25, 30, and 31 are denoted by the same numbers as those therein, and a common description will be omitted.

Steps ST2210 to ST2216 illustrated in FIG. 34 are similar to those in FIG. 23.

Procedure 2025 illustrated in FIG. 34 is similar to that in FIG. 20.

Steps ST2836 to ST2839A illustrated in FIG. 34 are similar to those in FIG. 30.

Step ST2040 illustrated in FIG. 34 is similar to that in FIG. 20.

In step ST3042 illustrated in FIG. 34, the base station determines resources of a sidelink positioning signal and an uplink SRS to be transmitted from UE #1. The resources of the sidelink positioning signal and the uplink SRS may be the same resources.

Step ST2044 illustrated in FIG. 34 is similar to that in FIG. 20.

Steps ST2851 to ST2855 illustrated in FIG. 34 are similar to those in FIG. 30. Step ST2057 is similar to that in FIG. 20. Steps ST2867 to ST2871 illustrated in FIG. 35 are similar to those in FIG. 30.

In step ST3073 illustrated in FIG. 35, the LMF requests the base station to receive a positioning signal. The request may include a request for the integrity assistance data. For example, signaling of NRPPa MEASUREMENT REQUEST (see Non Patent Literature 34) may be used for the notification.

In step ST3075 illustrated in FIG. 35, positioning signal transmission is performed from UE #1 to the UE #2 group, UE #3, and the base station. Positioning signals to be transmitted from UE #1 to the UE #2 group, UE #3, and the base station may use the same resources. In step ST2877, the UE #2 group receives the positioning signals. In step ST2879, UE #3 receives the positioning signal. In step ST3080, the base station receives the positioning signal.

In step ST3076 illustrated in FIG. 35, the base station notifies the LMF of a positioning signal reception result. The notification may include the integrity assistance data. For example, signaling of NRPPa MEASUREMENT RESPONSE (see Non Patent Literature 34) may be used for the notification.

Steps ST2881 to ST2885 illustrated in FIG. 35 are similar to those in FIG. 31.

Step ST1755 illustrated in FIG. 35 is similar to that in FIG. 17. Step ST1461 is similar to that in FIG. 14. Steps ST2391 to ST2395 are similar to those in FIG. 25.

Steps ST2890 to ST2894 illustrated in FIG. 35 are similar to those in FIG. 31.

The method disclosed in the third embodiment may be used in sidelink mode 2. For example, the method may be used for positioning in a UE present outside the coverage. For example, a combination of the method illustrated in FIG. 28 and the method illustrated in FIG. 30 and FIG. 31 may be used, a combination of the method illustrated in FIG. 28 and the method illustrated in FIG. 32 and FIG. 33 may be used, a combination of the method illustrated in FIG. 29 and the method illustrated in FIG. 30 and FIG. 31 may be used, or a combination of the method illustrated in FIG. 29 and the method illustrated in FIG. 32 and FIG. 33 may be used. In the combinations, UE #3 may perform the processes performed by the LMF, the AMF, and the base station in FIGS. 30 and 31 and/or FIGS. 32 and 33. Consequently, for example, it is possible to improve efficiency of communication resources in communication between UEs present outside the coverage.

A positioning signal transmission UE and a positioning signal reception UE (positioning signal measurement UE) may be provided. For example, in the example illustrated in FIGS. 30 and 31, UE #1 may be a positioning signal transmission UE, or the UE #2 group and UE #3 may be positioning signal measurement UEs. The LMF may determine the positioning signal transmission UE and the positioning signal reception UE (positioning signal measurement UE). The positioning signal may be, for example, a sidelink positioning signal. The UE to be positioned may be employed as the positioning signal transmission UE or the positioning signal measurement UE. One UE may be employed as both the positioning signal transmission UE and the positioning signal measurement UE. The LMF may determine the positioning signal transmission UE and the positioning signal measurement UE by using a capability of each UE, for example, a positioning capability of each UE. The LMF may make a request to a UE for a capability of the UE. For example, signaling of LPP request capabilities may be used for the request. The UE may notify the LMF of the capability of the UE as triggered by the request. For example, signaling of LPP provide capabilities may be used for the notification.

The LMF may instruct the positioning signal transmission UE to transmit a positioning signal. The instruction may be given, for example, via the base station. The LMF may give the base station an instruction on the positioning signal transmission from the positioning signal transmission UE. For example, signaling of NRPPa POSITIONING ACTIVATION REQUEST (see Non Patent Literature 34) may be used for the instruction. The base station may instruct the positioning signal transmission UE to transmit a positioning signal. For example, RRC signaling may be used for the instruction. The base station may notify the LMF of a response to the instruction. For the notification, for example, signaling of NRPPa POSITIONING ACTIVATION RESPONSE (see Non Patent Literature 34) may be used.

The LMF may instruct the positioning signal measurement UE to measure a positioning signal. For example, signaling of LPP Request Location Information may be used for the instruction. The instruction may include information about resources of a positioning signal to be received, information about the positioning signal transmission UE, information about the UE to be positioned, a request for the integrity assistance data, or two or more of the above. The positioning signal measurement UE may start receiving a positioning signal as triggered by the notification.

The positioning signal measurement UE may notify the LMF of a positioning signal reception result. For example, signaling of LPP Provide Location Information may be used for the notification. The signaling may include information about the positioning signal reception result, or the integrity assistance data.

RTT positioning using a sidelink may be performed. The UE to be positioned may be both the positioning signal transmission UE and the positioning signal measurement UE. Consequently, for example, it is possible to improve the precision of sidelink positioning.

The instruction on the positioning signal measurement and the instruction on the positioning signal transmission may be integrated into one signaling. For example, in a case where the UE is both the positioning signal transmission UE and the positioning signal measurement UE, signalings may be integrated. Consequently, for example, it is possible to reduce the amount of signaling in the communication system.

The above operation of the LMF may be performed by the server UE. For example, the server UE may perform the above operation of the LMF in a case where all of the above UEs are present outside the coverage. The above operation may be used in the second embodiment to the second modification of the second embodiment.

According to the third embodiment, communication resources required for positioning signals can be reduced, and as a result, communication efficiency in the communication system can be improved.

A statement of "gNB or cell" in the present disclosure means that it may either be a gNB or a cell unless otherwise specified.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per mini-slot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (user equipment); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a plurality of positioning signal transmission devices to transmit positioning signals;
a positioning signal reception device to receive the positioning signals; and
a location calculation device to calculate a location of a terminal to be positioned on a basis of reception results of the positioning signals by the positioning signal reception device, wherein
the plurality of positioning signal transmission devices output integrity assistance data to be used to calculate integrity of a location of the terminal to be positioned, and
the location calculation device calculates integrity of a location calculation result of the terminal to be positioned by using the integrity assistance data output from the plurality of positioning signal transmission devices.

2. The communication system according to claim 1, wherein
base stations constituting the communication system operate as the positioning signal transmission devices, and
a communication terminal connected to the base stations operates as the positioning signal reception device and the location calculation device, and calculates the location using the communication terminal as the terminal to be positioned.

3. The communication system according to claim 2, wherein
the communication terminal transmits the integrity to a host device of the base stations, and
the host device determines whether recalculation of the location is necessary on a basis of the integrity.

4. The communication system according to claim 1, wherein
base stations constituting the communication system operate as the positioning signal transmission devices,
a communication terminal connected to the base stations operates as the positioning signal reception device,
a host device of the base stations operates as the location calculation device,
the communication terminal notifies the host device of reception results of the positioning signals and the integrity assistance data, and
the host device calculates the location using the communication terminal as the terminal to be positioned.

5. The communication system according to claim 4, wherein
the host device determines whether recalculation of the location is necessary on a basis of the integrity.

6. The communication system according to claim 1, wherein
first communication terminals capable of sidelink communication for directly communicating with another communication terminal operate as the positioning signal transmission devices, and
a second communication terminal that performs the sidelink communication with the first communication terminals operates as the positioning signal reception device and the location calculation device, and calculates the location using the second communication terminal as the terminal to be positioned.

7. The communication system according to claim 6, wherein
at least one of the first communication terminals is in a state of being connected to a base station,
the second communication terminal transmits the integrity to a host device of the base station via the first communication terminal in a state of being connected to the base station, and
the host device determines whether recalculation of the location is necessary on a basis of the integrity.

8. The communication system according to claim 6, wherein
the second communication terminal transmits the integrity to any one of the first communication terminals, and
the first communication terminal that has received the integrity determines whether recalculation of the location is necessary on a basis of the integrity.

9. The communication system according to claim 6, wherein
the second communication terminal transmits reception results of the positioning signals and the integrity assistance data to any one of the first communication terminals, and
the first communication terminal that has received the reception results and the integrity assistance data calculates the location using the second communication terminal as the terminal to be positioned.

10. The communication system according to claim 9, wherein
the first communication terminal that has calculated a location of the second communication terminal determines whether recalculation of the location is necessary on a basis of the integrity.

11. The communication system according to claim 1, wherein
first communication terminals capable of sidelink communication for directly communicating with another communication terminal operate as the positioning signal transmission devices,
a second communication terminal that performs the sidelink communication with the first communication terminals operates as the positioning signal reception device,
a host device of a base station to which at least one of the first communication terminals is connected operates as the location calculation device,
the second communication terminal transmits reception results of the positioning signals and the integrity assistance data to the host device via the first communication terminal in a state of being connected to the base station, and
the host device calculates the location using the second communication terminal as the terminal to be positioned.

12. The communication system according to claim 11, wherein
the host device determines whether recalculation of the location is necessary on a basis of the integrity.

13. The communication system according to any one of claims 1 to 12, wherein
the plurality of positioning signal transmission devices transmit the positioning signals by using same communication resources.

14. The communication system according to claim 13, comprising:
a plurality of positioning signal reception devices, each identical with the positioning signal reception device, wherein,
the plurality of positioning signal reception devices receive the positioning signals transmitted from one of the positioning signal transmission devices.
